# EUROPEAN PATENT SPECIFICATION

(11) **EP 4 492 190 B1**
(45) Date of publication and mention of the grant of the patent: **05.08.2026**
(21) Application number: 23775203.5
(22) Date of filing: 09.03.2023
(51) Int. Cl.: G06F 1/16, G09F 9/30, H02K 7/116, H04M 1/02

(54) **ROLLABLE ELECTRONIC DEVICE COMPRISING MULTI-BAR STRUCTURE**
AUFROLLBARE ELEKTRONISCHE VORRICHTUNG MIT MEHRSTANGENSTRUKTUR
DISPOSITIF ÉLECTRONIQUE ENROULABLE COMPRENANT UNE STRUCTURE À BARRES MULTIPLES

(30) Priority: 21.03.2022 KR 20220034770; 23.06.2022 KR 20220076631
(43) Date of publication of application: 15.01.2025
(73) Proprietor: Samsung Electronics Co., Ltd, Suwon-si, Gyeonggi-do 16677 (KR)
(72) Inventor: CHO, Joongyeon, Suwon-si, Gyeonggi-do 16677 (KR); KANG, Youngmin, Suwon-si, Gyeonggi-do 16677 (KR); SHIN, Moonchul, Suwon-si, Gyeonggi-do 16677 (KR); YOON, Yeonggyu, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); LEE, Junghyeob, Suwon-si, Gyeonggi-do 16677 (KR); CHO, Sunggun, Suwon-si, Gyeonggi-do 16677 (KR)
(74) Representative: Gulde & Partner
(86) International application number: PCT/KR2023/003260
(87) International publication number: WO 2023/182705

(56) References cited:
- EP-A1- 4 152 121
- WO-A1-2021/230601
- WO-A1-2021/246560
- WO-A1-2021/246560
- WO-A1-2021/246802
- CN-A- 113 411 427
- KR-A- 20130 099 530
- KR-A- 20210 141 185
- US-A1- 2022 311 846
- US-A1- 2023 185 341
- US-B2- 11 122 696

## Description

### [Technical Field]

Various embodiments of the disclosure relate to a rollable electronic device including a multi-bar structure.

### [Background Art]

The development of information and communication technology and semiconductor technology has led to the integration of various functions into a single portable electronic device. For example, electronic devices may implement not only communication functions, but also entertainment functions such as games, multimedia functions such as music/video playback, communication and security functions for mobile banking, calendar management, and electronic wallet functions. These electronic devices are being miniaturized so that users may carry them conveniently.

As mobile communication services are expanded to include multimedia services, there is a need to increase the size of the display of an electronic device in order for a user to fully use multimedia services as well as voice calls and short messages. However, the size of the display of an electronic device is in a trade-off relationship with the miniaturization of the electronic device.

WO 2021/246560 A1 discloses a mobile terminal that can be switched from a first state to a second state by expanding in a first direction and comprises: a body that can expand in the first direction; a display unit including a front part positioned on the front surface of the body, a rear part positioned on the rear surface of the body, and a side part which is positioned between the front part and the rear part and which encompasses the side surface of the body in the first direction; and a side frame which covers the side part of the display unit and which is coupled to the body, wherein, with respect to the side frame, the mobile terminal including a dustproof pad for removing foreign substances includes the side frame for covering the side part of the flexible display unit, and thus can prevent the display unit from being damaged.

### [Detailed Description of the Invention]

### [Technical Problem]

An electronic device (e.g., a mobile terminal) may include a display having a flat surface or both flat and curved surface. The electronic device including the display may be limited in realizing a screen larger than the size of the electronic device due to the fixed structure of the display. Therefore, an electronic device including a rollable display is under study.

When the rollable display is rolled up or unfolded, a foreign material may be introduced into the electronic device through an empty space formed by the movement of the rollable display. To prevent the introduction of a foreign material, a dustproof member may be used with the display. However, when the dustproof member comes into contact with the display during a slide operation of the electronic device, the display may be damaged or a sliding feeling may be deteriorated.

According to various embodiments of the disclosure, it an electronic device may be provided, which reduces friction between a display and a dustproof member during a slide operation of the electronic device, while reducing the introduction of a foreign material into the electronic device.

The problems addressed by the disclosure are not limited to the above-mentioned problems, and may be expanded in various ways without departing from the spirit and scope of the disclosure.

### [Technical Solution]

The invention is set out in the appended set of claims.

According to various embodiments of the disclosure, an electronic device includes a flexible display, a first housing surrounding at least a portion of the flexible display, a second housing supporting the flexible display and configured to move relative to the first housing, a multi-bar structure supporting at least a portion of the flexible display, a roller rotatably connected to the first housing, and a dustproof member connected to the first housing. The multi-bar structure includes at least one first support bar including at least one first protrusion configured to contact the roller in a first state, and at least one second support bar including at least one second protrusion configured to contact the roller in a second state.

According to various embodiments of the disclosure, an electronic device includes a first housing, a second housing accommodated at least partially in the first housing and configured to move relative to the first housing, a display assembly including a display configured to be unfolded based on sliding movement of the second housing and a multi-bar structure supporting at least a portion of the display, a roller rotatably connected to the first housing, and a dustproof member connected to the first housing and disposed between the first housing and the display. The display assembly includes at least one first support bar including at least one first protrusion configured to contact the roller in a closed state of the electronic device, at least one second support bar including at least one second protrusion configured to contact the roller in an opened state of the electronic device, and at least one third bar disposed between the at least one first support bar and the at least one second bar and configured to be spaced apart from the roller in an intermediate state between the closed state and the opened state.

### [Advantageous Effects]

According to various embodiments of the disclosure, an electronic device may include a dustproof member which is in contact with a display in an opened state or closed state and spaced apart from the display in an intermediate state. As the dustproof member is in contact with the display in the opened state or closed state, the introduction of a foreign material may be reduced. As the dustproof member is spaced apart from the display in the intermediate state, damage to the display may be reduced and a sliding feeling may be improved.

In addition, various other effects may be provided that are identified herein, either directly or indirectly.

### [Brief Description of Drawings]

FIG. 1 is a block diagram illustrating an electronic device in a network environment according to various embodiments of the disclosure.
FIG. 2 is a diagram illustrating a state in which a second display area of a display is accommodated in a housing according to various embodiments of the disclosure.
FIG. 3 is a diagram illustrating a state in which a second display area of a display is exposed to the outside of a housing according to various embodiments of the disclosure.
FIG. 4 is an exploded perspective view illustrating an electronic device according to various embodiments of the disclosure.
FIG. 5A is a cross-sectional view taken along line A-A' of FIG. 2 according to various embodiments of the disclosure.
FIG. 5B is a cross-sectional view taken along line B-B' of FIG. 3 according to various embodiments of the disclosure.
FIG. 6 is a cross-sectional view illustrating an electronic device in an intermediate state according to various embodiments of the disclosure.
FIG. 7 is a cross-sectional view illustrating an electronic device in a closed state according to various embodiments of the disclosure.
FIG. 8 is a cross-sectional view illustrating an electronic device in an opened state according to various embodiments of the disclosure.
FIG. 9 is a perspective view illustrating a multi-bar structure in a closed state according to various embodiments of the disclosure.
FIG. 10 is a diagram illustrating a first support bar according to various embodiments of the disclosure.
FIG. 11 is a cross-sectional view taken along plane C-C' of FIG. 10.
FIG. 12 is a perspective view illustrating a state in which the first support bar of FIG. 10 is in contact with a roller.
FIG. 13 is a perspective view illustrating a multi-bar structure in an opened state according to various embodiments of the disclosure.
FIG. 14 is a diagram illustrating a second support bar according to various embodiments of the disclosure.
FIG. 15 is a cross-sectional view taken along plane D-D' of FIG. 14.
FIG. 16 is a perspective view illustrating a state in which the second support bar of FIG. 14 is in contact with a roller.
FIG. 17A is an internal perspective view illustrating an electronic device in a closed state according to various embodiments of the disclosure.
FIG. 17B is an internal perspective view illustrating an electronic device in an opened state according to various embodiments of the disclosure.
FIG. 18 is a perspective view illustrating an electronic device including a frame and a roller mounted on the frame according to various embodiments of the disclosure.
FIG. 19 is a perspective view illustrating an electronic device including a frame, a roller, and a battery cover according to various embodiments of the disclosure.
FIG. 20 is a diagram illustrating movement of a multi-bar structure according to various embodiments of the disclosure.

### [Mode for Carrying out the Invention]

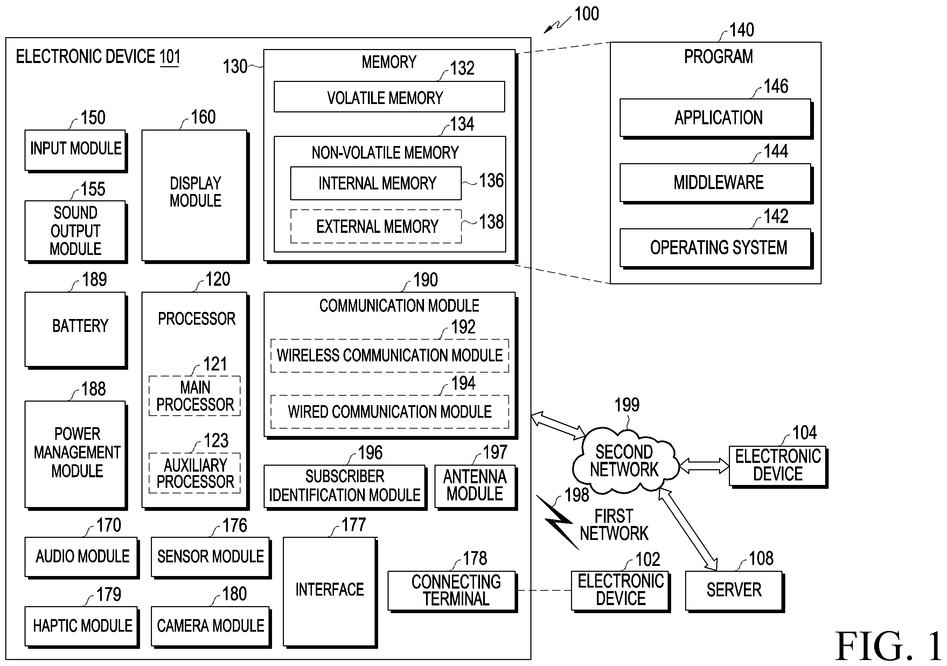

FIG. 1 is a block diagram illustrating an electronic device in a network environment according to various embodiments of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™} wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed on a substrate (e.g., a PCB). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

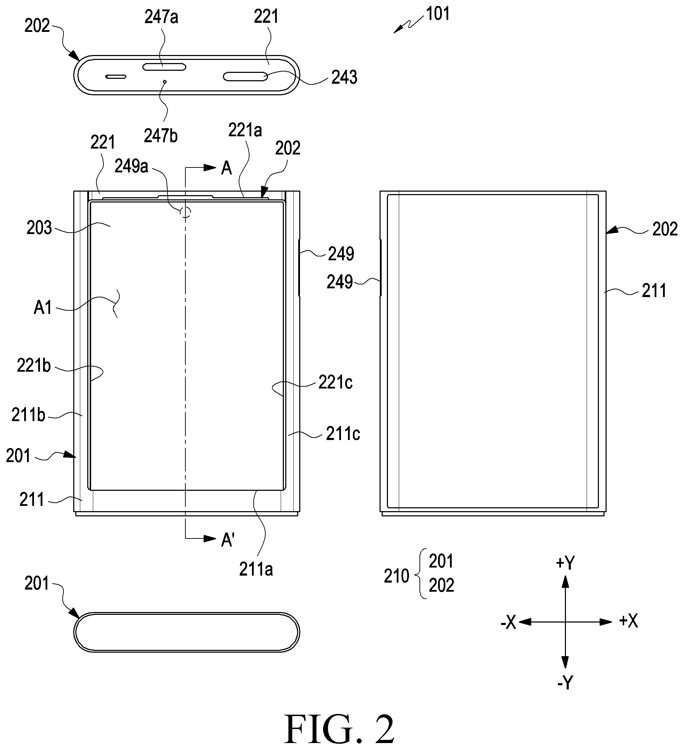

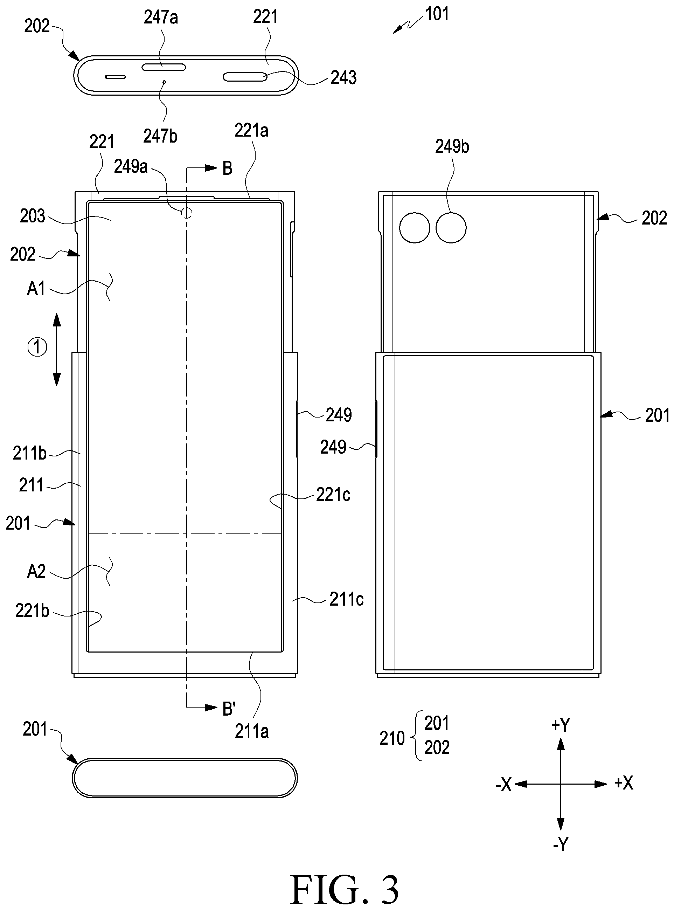

FIG. 2 is a diagram illustrating a state in which a second display area of a display is accommodated in a housing according to various embodiments of the disclosure. FIG. 3 is a diagram illustrating a state in which the second display area of the display is exposed to the outside of the housing according to various embodiments of the disclosure.

FIGS. 2 and 3 illustrate a structure in which a display 203 (e.g., a flexible display or rollable display) extends in a longitudinal direction (e.g., +Y direction), when viewed from the front of the electronic device 101. However, the direction of extension of the display 203 is not limited to one direction (e.g., +Y direction). For example, a design modification may be made such that the display 203 is extendable in an upward direction (e.g., +Y direction), a right direction (e.g., +X direction), a left direction (e.g., -X direction), and/or a downward direction (e.g., -Y direction).

The state illustrated in FIG. 2 may be defined as a closed state, slide-in state, or first state of the electronic device 101 or a housing 210. For example, the first state may be defined as a closed state of a second housing 202 with respect to a first housing 201.

The state illustrated in FIG. 3 may be defined as an opened state, slide-out state, or second state of the electronic device 101 or the housing 210. For example, the second state may be defined as an opened state of the second housing 202 with respect to the first housing 201. According to an embodiment, the "closed state" or "opened state" may be defined as a state in which the electronic device is closed or opened.

Referring to FIGS. 2 and 3, the electronic device 101 may include the housing 210. The housing 210 may include the first housing 201 and the second housing 202 disposed to be movable with respect to the first housing 201. In some embodiments, it may be interpreted as a structure in which the first housing 201 is disposed to be slidable with respect to the second housing 202 in the electronic device 101. According to an embodiment, the second housing 202 may be disposed to be reciprocable by a predetermined distance in a direction illustrated with respect to the first housing 201, for example, in a direction indicated by an arrow ①.

According to various embodiments, the second housing 202 may be referred to as a second structure, a slide part, or a slide housing, and movable relative to the first housing 201. According to an embodiment, the second housing 202 may accommodate various electrical and electronic components such as a circuit board or a battery.

According to an embodiment, a motor, a speaker, a SIM socket, and/or a sub-circuit board electrically connected to a main circuit board may be disposed in the first housing 202. The second housing 201 may accommodate the main circuit board with electrical components such as an AP and a CP mounted thereon.

According to various embodiments, the first housing may include a first cover member 211 (e.g., a main case). The first cover member 211 may include a (1-1)^{th} sidewall 211a, a (1-2)^{th} sidewall 211b extending from the (1-1)^{th} sidewall 211a, and a (1-3)^{th} sidewall 211c extending from the (1-1)^{th} sidewall 211a and substantially parallel to the (1-2)^{th} sidewall 211b. According to an embodiment, the (1-2)^{th} sidewall 211b and the (1-3)^{th} sidewall 211c may be formed substantially perpendicular to the (1-1)^{th} sidewall 211a.

According to various embodiments, the (1-1)^{th} sidewall 211a, the (1-2)^{th} sidewall 211b, and the (1-3)^{th} sidewall 211c of the first cover member 211 may be formed with one side (e.g., a front surface) open to accommodate (or surround) at least a portion of the second housing 202. For example, the second housing 202 may be at least partially surrounded by the first housing 201 and slide in a direction parallel to a first surface F1 or a second surface F2, for example, in the direction of the arrow ①, while being guided by the first housing 201. According to a certain embodiment, the cover member 211, the (1-1)^{th} sidewall 211a, the (1-2)^{th} sidewall 211b, and/or the (1-3)^{th} sidewall 211c may be integrally formed. According to a certain embodiment, the first cover member 211, the (1-1)^{th} sidewall 211a, the (1-2)^{th} sidewall 211b, and/or the (1-3)^{th} sidewall 211c may be formed as separate housings and combined or assembled.

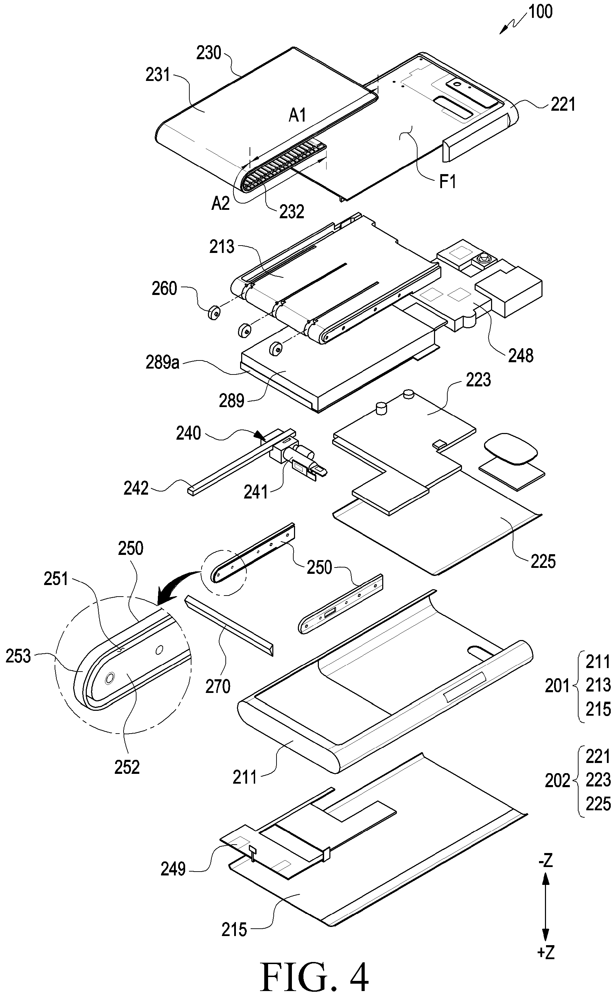

According to an embodiment, the first cover member 211 may cover at least a portion of the display 203. For example, at least a portion of the display 203 may be surrounded by the (1-1)^{th} sidewall 211a, the (1-2)^{th} sidewall 211b, and/or the (1-3)^{th} sidewall 211c of the first cover member 211. According to various embodiments, the second housing 202 may include a second cover member 221 (e.g., a slide plate). The second cover member 221 may include the first surface (e.g., the first surface F1 in FIG. 4) forming at least a portion of the second cover member 221. According to an embodiment, the second cover member 221 may support at least a portion (e.g., a first display area A1) of the display 203. According to an embodiment, the second cover member 221 may be referred to as a front cover.

According to an embodiment, the second cover member 221 may include a (2-1)^{th} sidewall 221a, a (2-2)^{th} sidewall 221b extending from the (2-1)^{th} sidewall 221a, and a (2-3)^{th} sidewall 221c extending from the (2-1)^{th} sidewall 221a and substantially parallel to the (2-2)^{th} sidewall 221b. According to an embodiment, the (2-2)^{th} sidewall 221b and the (2-3)^{th} sidewall 221c may be formed substantially perpendicular to the (2-1)^{th} sidewall 221a.

According to various embodiments, the second housing 202 may move to the opened state and closed state with respect to the first housing 201 in a first direction (e.g., the direction ① parallel to the (1-2)^{th} sidewall 211b or the (1-2)^{th} sidewall 211c. The second housing 202 may move to be located at a first distance from the (1-1)^{th} sidewall 211a in the closed state and at a second distance larger than the first distance from the (1-1)^{th} sidewall 211a in the opened state. In an embodiment, the first cover member 211 of the first housing 201 may surround a portion of the (2-2)^{th} sidewall 221b and the (2-3)^{th} sidewall 221c.

According to various embodiments, the electronic device 101 may include the display 203, key input devices 245, a connector hole 243, audio modules 247a and 247b, or camera modules 249a and 249b. According to an embodiment, the electronic device 101 may further include an indicator (e.g., an LED device) or various sensor modules.

According to various embodiments, the display 203 may include the first display area A1 and a second display area A2 configured to be exposed to the outside of the electronic device based on sliding movement of the housing 210. According to an embodiment, as the first housing 201 moves (e.g., slides) with respect to the second housing 202, the second display area A2 may be accommodated into the first housing 201 (e.g., slide-in operation) or visually exposed to the outside of the electronic device 101 (e.g., slide-out operation). According to an embodiment, the first display area A1 may be disposed on the second **housing** 202. For example, the first display area A1 may be disposed on the second cover member 221. According to an embodiment, the second display area A2 may extend from the first display area A1, and as the second housing 202 slides, the second display area A2 may be inserted or accommodated into the first housing or may be exposed to the outside of the electronic device 101.

According to various embodiments, the second display area A2 may be accommodated into an internal space of the housing 210 or exposed to the outside of the electronic device 101 by moving while being guided substantially by an area (e.g., a curved surface 213a in FIG. 4). According to an embodiment, the second display area A2 may move based on sliding movement of the second housing 202 in the first direction (e.g., the direction indicated by the arrow ①. For example, a portion of the second display area A2 may be deformed into a curved surface at a position corresponding to the curved surface 213a of the first housing 201 during sliding movement of the second housing 202.

According to various embodiments, when viewed from above the second cover member 221 (e.g., a front cover), when the second housing 202 moves from the closed state to the opened state, the second display area A2 may form a substantially flat surface with the first display area A1, while gradually being exposed to the outside of the second housing 202. According to an embodiment, the display 203 may be coupled to or disposed adjacent to a touch sensing circuit, a pressure sensor capable of measuring the intensity (pressure) of a touch, and/or a digitizer that detects a magnetic stylus pen. According to an embodiment, regardless of the closed or opened state, an exposed portion of the second display area A2 may be located on a portion (e.g., the curved surface 213a in FIG. 4) of the first housing, and maintain the shape of the curved surface at the position corresponding to the curved surface 213a.

According to various embodiments, the key input devices 245 may be located in an area of the first housing 201. Depending on the appearance and a use state, the electronic device 101 may be designed to be without the illustrated key input devices 245 or to include additional key input device(s). According to an embodiment, the electronic device 101 may include a key input device not shown, such as a home key button or a touch pad disposed around the home key button. According to an embodiment, at least some of the key input devices 245 may be disposed on the (1-1)^{th} sidewall 211a, the (1-2)^{th} sidewall 211b, and/or the (1-3)^{th} sidewall 211c of the first housing 201.

According to various embodiments, the connector hole 243 may be omitted according to an embodiment, and may accommodate a connector (e.g., a USB connector) for transmitting power and/or data to and from an external electronic device. According to an embodiment (not shown), the electronic device 101 may include one or more connector holes 243, and some of the one or more connector holes 243 may function as connector holes for transmitting and receiving audio signals to and from an external electronic device. In the illustrated embodiment, the connector hole 243 is disposed on the second housing 202, to which the disclosure is not limited. The connector hole 243 or a connector hole not shown may be disposed on the first housing 201.

According to various embodiments, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound, and the microphone may obtain sound external to the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as a single hole, or include a speaker (e.g., a piezo speaker) without the speaker hole 247a.

According to various embodiments, the camera modules 249a and 249b may include a first camera module 249a (e.g., front camera) and a second camera module 249b (e.g., rear camera). According to an embodiment, the electronic device 101 may include at least one of a wide-angle camera, a telephoto camera, or a close-up camera, and according to an embodiment, include an IR projector and/or an IR receiver to measure a distance to a subject. The camera modules 249a and 249b may include one or more lenses, an image sensor, and/or an image signal processor. The first camera module 249a may be disposed to face in the same direction as the display 203. For example, the first camera module 249a may be disposed around the first display area A1 or in an area overlapping the display 203 and, when disposed in the area overlapping the display 203, may be able to capture a subject through the display 203. According to an embodiment, the first camera module 249a may not be visually exposed to a screen display area (e.g., the first display area A1) and include a hidden under display camera (UDC). According to an embodiment, the second camera module 249a may capture a subject in a direction opposite to the display A1. According to an embodiment, the first camera module 249a and/or the second camera module 249b may be disposed on the second housing 202.

According to various embodiments, an indicator (not shown) of the electronic device 101 may be disposed in the first housing 201 or the second housing 202, and include an LED to provide state information about the electronic device 101 as a visual signal. A sensor module (not shown) of the electronic device 101 may generate an electrical signal or data value corresponding to an internal operational state or an external environmental state of the electronic device 101. The sensor module may include, for example, a proximity sensor, a fingerprint sensor, or a biometric sensor (e.g., an iris/facial recognition sensor or an HRM sensor). In another embodiment, the sensor module may further include at least one of, for example, a gesture sensor, a gyro sensor, a barometric pressure sensor, a magnetic sensor, an acceleration sensor, a grip sensor, a color sensor, an IR sensor, a temperature sensor, a humidity sensor, or an illuminance sensor.

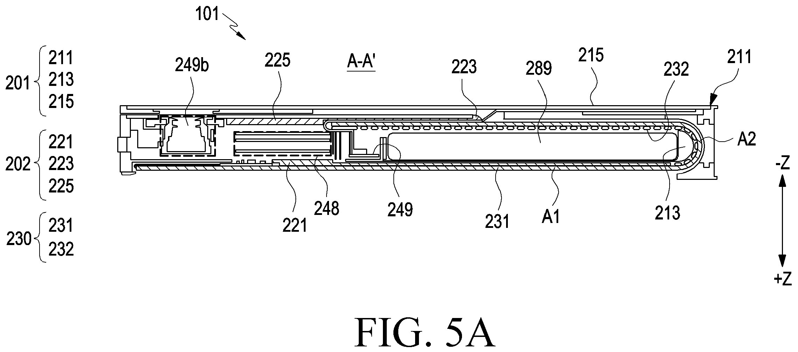

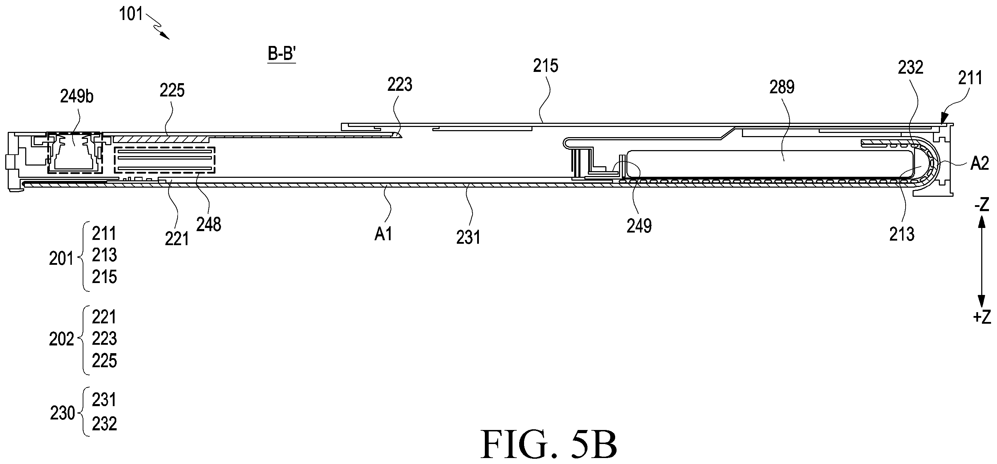

FIG. 4 is an exploded perspective view illustrating an electronic device according to various embodiments of the disclosure. FIG. 5A is a cross-sectional view taken along line A-A' of FIG. 2 according to various embodiments of the disclosure. FIG. 5B is a cross-sectional view taken along line B-B' of FIG. 3 according to various embodiments of the disclosure.

Referring to FIG. 4, FIG. 5A, and/or FIG. 5B, the electronic device 101 may include the first housing 201, the second housing 202, a display assembly 230, and a driving structure 240. The configurations of the first housing 201, the second housing 202, and the display assembly 230 in FIG. 4 may be wholly or partially identical to those of the first housing 201, the second housing 202, and the display 203 in FIG. 2 and/or FIG. 3.

According to various embodiments, the first housing 201 may include the first cover member 211 (e.g., the first cover member 211 in FIGS. 2 and 3), the frame 213, and a first rear plate 215.

According to various embodiments, the first cover member 211 may accommodate at least a portion of the frame 213 and a component (e.g., a battery 289) located on the frame 213. According to an embodiment, the first cover member 211 may surround at least a portion of the second housing 202. According to an embodiment, a second circuit board 249 accommodating electronic components (e.g., the processor 120 and/or the memory 130 in FIG. 1) may be connected to the first cover member 211.

According to various embodiments, the frame 213 may be connected to the first cover member 211. For example, the frame 213 may be connected to the first cover member 211, and the second housing 202 may move relative to the first cover member 211 and/or the frame 213. According to an embodiment, the frame 213 may accommodate the battery 289. According to an embodiment, the frame 213 may include the curved surface 213a facing the display assembly 230.

According to various embodiments, the first rear plate 215 may substantially form at least a portion of the exterior of the first housing 201 or the electronic device 101. For example, the first rear plate 215 may be coupled to an outer surface of the first cover member 211. According to an embodiment, the first rear plate 215 may provide a decorative effect on the exterior of the electronic device 101. The first rear plate 215 may be manufactured using at least one of metal, glass, synthetic resin, or ceramic.

According to various embodiments, the second housing 202 may include the second cover member 221 (e.g., the second cover member 221 in FIGS. 2 and 3), a rear cover 223, and a second rear plate 225.

According to an embodiment, the second cover member 221 may be connected to the first housing 201 through a guide rail 250 and reciprocate in a straight line in one direction (e.g., the direction of the arrow ① in FIGS. 2 and 3) while being guided by the guide rail 250.

According to various embodiments, the second cover member 221 may support at least a portion of the display 203. For example, the second cover member 221 may include the first surface F1, and the first display area A1 of the display 203 may be substantially located on the first surface F1 and maintained in a flat shape. According to an embodiment, the second cover member 221 may be formed of a metallic material and/or a non-metallic (e.g., polymer) material. According to an embodiment, a first circuit board 248 accommodating electronic components (e.g., the processor 120 and/or the memory 130 in FIG. 1) may be connected to the second cover member 221.

According to various embodiments, the rear cover 223 may protect components (e.g., the first circuit board 248) located on the second cover member 221. For example, the rear cover 223 may be connected to the second cover member 221 and surround at least a portion of the first circuit board 248. According to an embodiment, the rear cover 223 may include an antenna pattern to communicate with an electronic device external to the electronic device 101. For example, the rear cover 223 may include a laser direct structuring (LDS) antenna.

According to various embodiments, the second rear plate 225 may substantially form at least a portion of the exterior of the second housing 202 or the electronic device 101. For example, the second rear plate 225 may be coupled to an outer surface of the second cover member 221. According to an embodiment, the second rear plate 225 may provide a decorative effect on the exterior of the electronic device 101. The second rear plate 215 may be manufactured using at least one of metal, glass, synthetic resin, or ceramic.

According to various embodiments, the display assembly 230 may include a display 231 (e.g., the display 203 in FIG. 2 and/or FIG. 3) and a multi-bar structure 232 supporting the display 203. According to an embodiment, the display 231 may be referred to as a flexible display, a foldable display, and/or a rollable display.

According to various embodiments, the multi-bar structure 232 may be connected or attached to at least a portion (e.g., the second display area A2) of the display 231. According to an embodiment, as the second housing 202 slides, the multi-bar structure 232 may move relative to the first housing 201. In the closed state (e.g., FIG. 2), most of the multi-bar structure 232 may be accommodated in the first housing 201 and located between the first cover member 211 and the second cover member 221. According to an embodiment, at least a portion of the multi-bar structure 232 may move in correspondence with the curved surface 213a located at an edge of the frame 213. According to an embodiment, the multi-bar structure 232 may be referred to as a display support member or a support structure.

According to various embodiments, the driving structure 240 may move the second housing 202 relative to the first housing 201. For example, the driving structure 240 may include a motor 241 configured to generate a driving force for sliding movement of the housings 201 and 202. The driving structure 240 may include a gear (e.g., a pinion) connected to the motor 241 and a rack 242 configured to mesh with the gear.

According to various embodiments, a housing in which the rack 242 is located may be different from a housing in which the motor 241 is located. According to an embodiment, the motor 241 may be connected to the second housing 202, and the rack 242 may be connected to the first housing 201. According to another embodiment, the motor 241 may be connected to the first housing 201, and the rack 242 may be connected to the second housing 202.

According to various embodiments, the first housing 201 may accommodate the first circuit board 248 (e.g., the main board). According to an embodiment, a processor, memory, and/or an interface may be mounted on the first circuit board 248. The processor may include, for example, one or more of a CPU, an AP, a GPU, an ISP, a sensor hub processor, or a CP. According to various embodiments, the first circuit board 248 may include a flexible printed circuit board type radio frequency cable (FRC). The first circuit board 248 may be disposed on at least a portion of the second cover member 221 and electrically connected to an antenna module and a communication module.

According to an embodiment, the memory may include, for example, volatile memory or non-volatile memory.

According to an embodiment, the interface may include, for example, an HDMI, a USB interface, an SD card interface, and/or an audio interface. For example, the interface may electrically or physically connect the electronic device 101 to an external electronic device and include a USB connector, an SD card/MMC connector, or an audio connector.

According to various embodiments, the electronic device 101 may include the second circuit board 249 (e.g., sub-circuit board) within the first housing 201, spaced apart from the first circuit board 248 (e.g., the main circuit board). The second circuit board 249 may be electrically connected to the first circuit board 248 through a connecting flexible board. The second circuit board 249 may be electrically connected to electrical components disposed in an end area of the electronic device 101, such as the battery 289 or a speaker and/or a SIM socket, to transmit signals and power. According to an embodiment, the second circuit board 249 may accommodate a wireless charging antenna (e.g., a coil). For example, the battery 289 may receive power from an external electronic device using the wireless charging antenna. In another example, the battery 289 may transfer power to an external electronic device using the wireless charging antenna.

According to various embodiments, the battery 289, which is a device for supplying power to at least one component of the electronic device 101, may be a non-rechargeable primary battery, a rechargeable secondary battery, or a fuel cell. The battery 289 may be disposed integrally within the electronic device 101 or detachably from the electronic device 101. According to an embodiment, the battery 289 may be formed as a single integrated battery or include a plurality of separate batteries. According to an embodiment, the battery 289 may be located on the frame 213 and slide together with the frame 213.

According to various embodiments, the guide rail 250 may guide movement of the multi-bar structure 232. For example, the multi-bar structure 232 may slide along a slit 251 formed on the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed on an inner surface of the guide rail 250.

According to various embodiments, the guide rail 250 may provide pressure to the multi-bar structure 233 based on driving of the driving structure 240. According to an embodiment, the second housing 202 (e.g., the second cover member 221) may move relative to the first housing 201 (e.g., the frame 213) by a driving force generated by the motor 241 of the driving structure 240. When the first housing 201 moves relative to the second housing 202, an inner portion 252 and/or outer portion 253 of the guide rail 250 may provide pressure to the multi-bar structure 232 located within the slit 251. At least a portion of the display assembly 230 may be unfolded or rolled based on the pressure received from the guide rail 250.

Referring to FIG. 5A, in the electronic device 101 in the contracted or closed state (e.g., the first state), at least a portion of the second housing 202 may be disposed to be accommodated in the first housing 201. As the second housing 202 is disposed to be accommodated in the first housing 201, the volume of the electronic device 101 may decrease. As the second housing 202 is disposed to be accommodated in the first housing 201, the size of a visually exposed area of the display 231 may change.

According to an embodiment, when the second housing 202 is fully accommodated in the first housing 201, the visually exposed size of the display 231 may be minimized. A structure in which the second housing 202 is fully accommodated in the first housing 201 may be referred to as a structure in which all of an accommodable area of the second housing 202 is accommodated inside the first housing 201. For example, in the first state in which the second housing 202 is fully accommodated in the first housing 201 (e.g., FIG. 5A), the first display area A1 of the display 231 may be visually exposed, and the second display area A2 may not be visually exposed. According to an embodiment, in the first state, at least a portion of the second display area A2 may be disposed between the battery 289 and the rear plates 215 and 225.

Referring to FIG. 5B, according to an embodiment, in the opened or extended state (e.g., second state) of the electronic device 101, at least a portion of the second housing 202 may protrude or be exposed from the first housing 201. As the second housing 202 protrudes from the first housing 201, the volume of the electronic device 101 may increase. As the second housing 202 protrudes from the first housing 201, the size of the visually exposed area of the display 231 may change. For example, in the electronic device 101 in the second state, at least a portion of the second display area A2 of the display 231 may be visually exposed to the outside of the electronic device 101, together with the first display area A1.

According to various embodiments, the guide rail 250 may provide pressure to the multi-bar structure 232 based on driving of the motor 241.

According to an embodiment, when the electronic device 101 slides out, the inner portion 252 of the guide rail 250 may provide pressure to the multi-bar structure 232. The multi-bar structure 232 may move along the slit 251 of the guide rail 250 by the pressure received through the inner portion 252, and the electronic device 101 may be switched to the unfolded state (e.g., FIG. 3). When the electronic device 101 is unfolded, at least a portion of the display assembly 230 accommodated between the first cover member 211 and the frame 213 of FIG. 4 may extend to the front surface.

According to an embodiment, when the electronic device 101 slides in, the outer portion 253 of the guide rail 250 may provide pressure to the multi-bar structure 232. The multi-bar structure 232 may move along the slit 251 of the guide rail 250 by the pressure received through the outer portion 253, and the electronic device 101 may be switched to the closed state (e.g., FIG. 2). When the electronic device 101 is rolled, the at least portion of the display assembly 230 of FIG. 4 may be accommodated between the first cover member 211 and the frame 213.

According to various embodiments, the electronic device 101 may include at least one roller 260 to guide movement of the display assembly 230. For example, the roller 260 may reduce a frictional force caused by movement of the multi-bar structure 232. According to an embodiment, the multi-bar structure 232 of the display assembly 230 may move along the roller 260. According to an embodiment, the roller 260 may be rotatably connected to the frame 213.

According to various embodiments, the electronic device 101 may include a dustproof member 270 to reduce the introduction of a foreign material into the electronic device 101. For example, the dustproof member 270 may include a plurality of fine fibers. According to an embodiment, the dustproof member 270 may be referred to as a sweeper. According to an embodiment, the dustproof member 270 may be disposed between the display assembly 230 and the first housing 201 (e.g., the first cover member 211). The dustproof member 270 may reduce the introduction of a foreign material between the display assembly 230 and the first cover member 211.

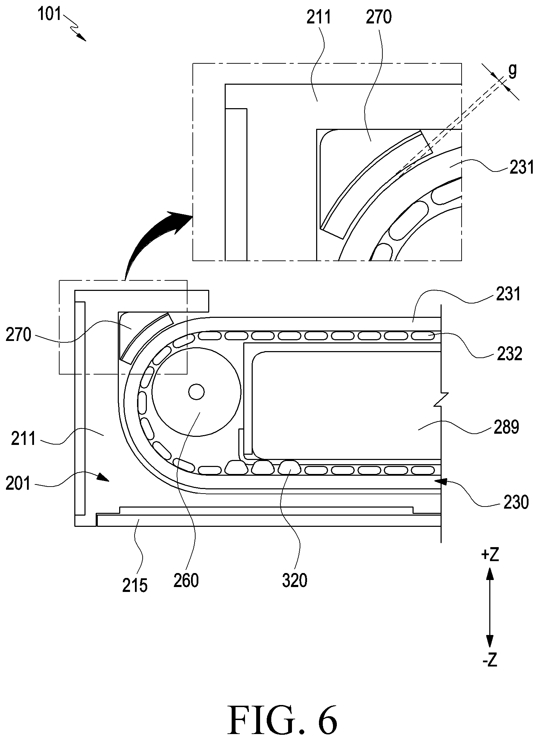

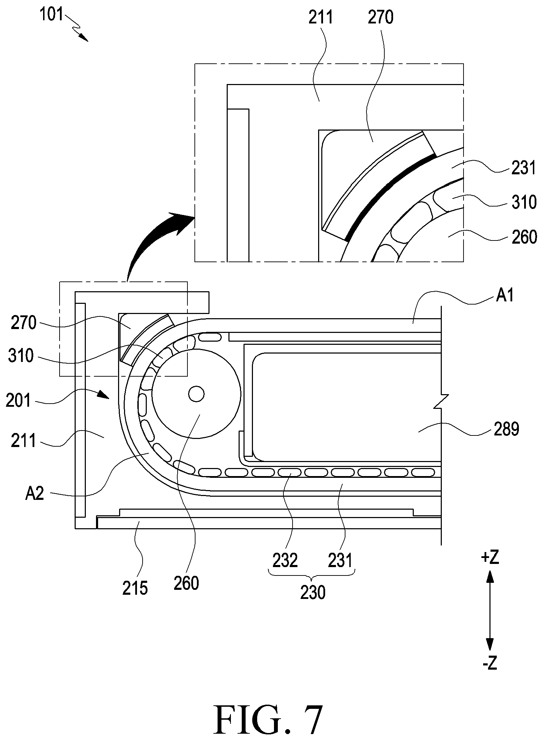

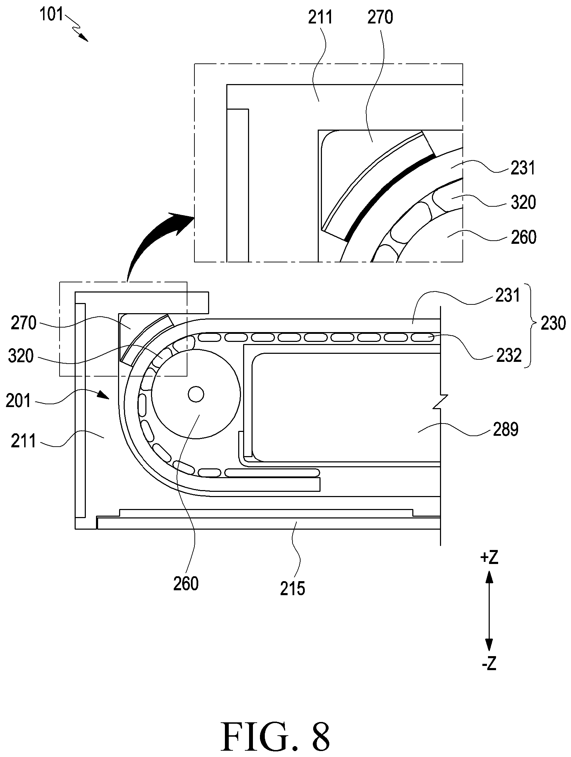

FIG. 6 is a cross-sectional view illustrating an electronic device in an intermediate state according to various embodiments of the disclosure. FIG. 7 is a cross-sectional view illustrating the electronic device in the closed state according to various embodiments of the disclosure. FIG. 8 is a cross-sectional view illustrating the electronic device in the opened state according to various embodiments of the disclosure.

Referring to FIGS. 6, 7, and 8, the electronic device 101 may include the first housing 201 (e.g., the first cover member 211, the frame 213, and the first rear plate 215), the display 231, the roller 260, the dustproof member 270, the battery 289, and the multi-bar structure 232. The configurations of the first housing 201, the display 231, the roller 260, the dustproof member 270, the battery 289, and the multi-bar structure 232 in FIGS. 6, 7, and 8 may be wholly or partially identical to those of the first housing 201, the display 231, the roller 260, the dustproof member 270, the battery 289, and the multi-bar structure 232 in FIG. 4.

According to various embodiments, the roller 260 may guide movement of the multi-bar structure 232. For example, a portion (e.g., the second display area A2) of the display 231 may be bent along the roller 260 at a position facing the roller 260. The multi-bar structure 232 may move together with the display 231 along the roller 260. According to an embodiment, the roller 260 may be rotatably connected to the first housing 201. For example, the roller 260 may be rotatably connected to the frame 213.

According to various embodiments, the dustproof member 270 may be connected to the first housing 201. According to an embodiment, the dustproof member 270 may be connected or bonded to the first cover member 211. For example, the dustproof member 270 may be connected to the first cover member 211 using an adhesive tape or a fastening structure (e.g., a screw). The dustproof member 270 is disposed between the first cover member 211 and the display 231. According to an embodiment, the second display area A2 of the display 231 may be located between the roller 260 and the dustproof member 270.

According to various embodiments, the dustproof member 270 may be in contact with the display 231 or spaced apart from the display 231 based on a rolled state of the display 231.

Referring to FIGS. 7 and 8, when the electronic device 101 is in the first state (e.g., fully closed state (e.g., FIG. 7)) or the second state (e.g., fully opened state), the dustproof member 270 may be in contact with the display 231. As the dustproof member 270 is in contact with the display 231, the introduction of a material external to the electronic device 101 between the first cover member 211 and the dustproof member 270 may be prevented.

Referring to FIG. 6, in a third state (e.g., the intermediate state) of the electronic device 101, the dustproof member 270 may be spaced apart from the display 231. For example, in the intermediate state of the electronic device 101, an empty space g may exist between the display 231 and the dustproof member 270. As the electronic device 101 slides with the dustproof member 270 and the display 231 spaced apart from each other, pressure provided to the display 231 may be reduced, and damage to the display 231 may be reduced. During the sliding operation of the electronic device 101, the dustproof member 270 may be spaced apart from the display 231 such that a force transmitted to the display 231 is reduced, which may reduce damage to the display 231.

The intermediate state of the electronic device 101 may be interpreted as a partially opened state of the electronic device 101. For example, the intermediate state of the electronic device 101 may be a state between the opened state of the electronic device 101 and the closed state of the electronic device 101, in which a portion of the second display area (e.g., the second display area A2 in FIG. 3) is exposed to the outside. For example, the electronic device 101 may be sliding in or sliding out in the third state.

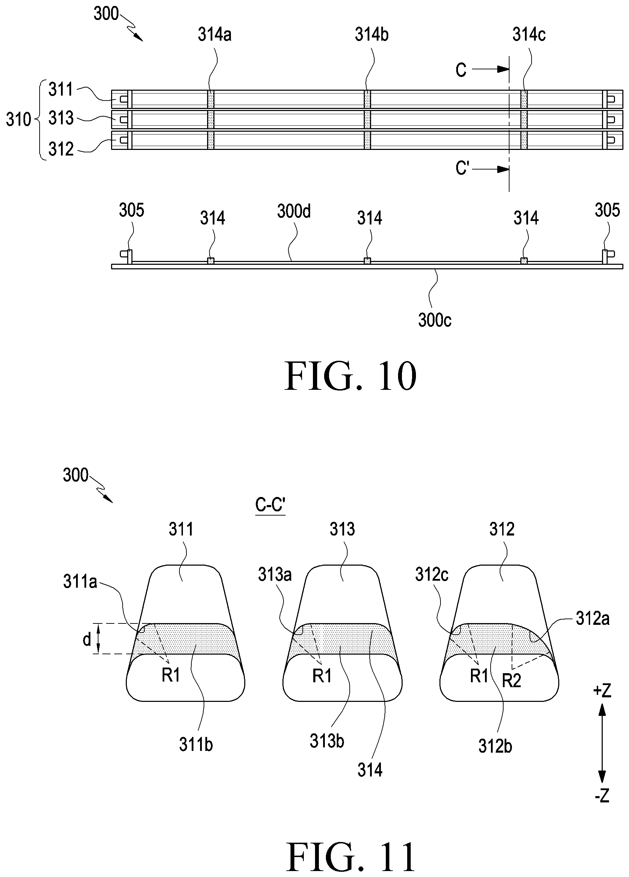

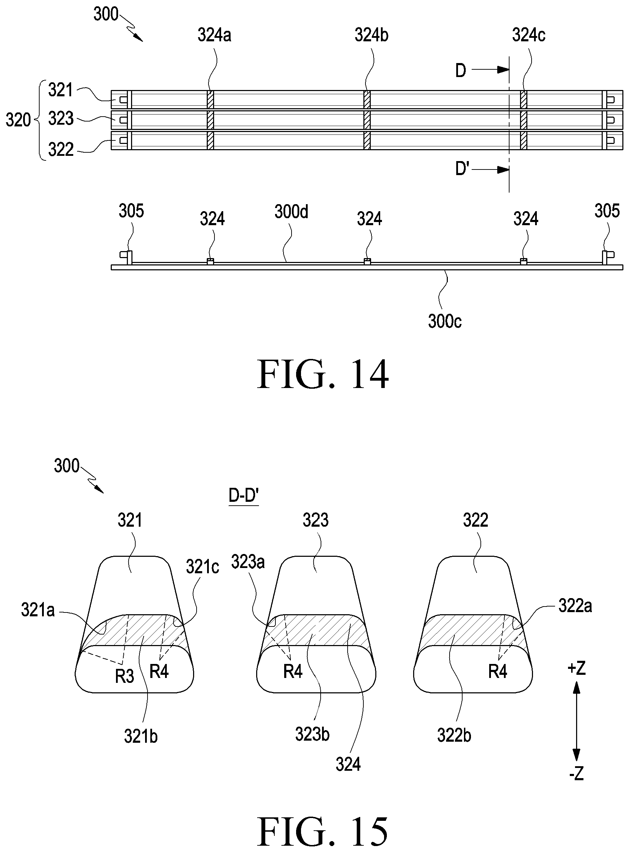

According to various embodiments, the multi-bar structure 232 may include at least one bar to change a contact state between the display 231 and the dustproof member 270 based on an extent to which the electronic device 101 is unfolded. The multi-bar structure 232 includes a first support bar 310 including a protrusion (e.g., a first protrusion 314 in FIG. 11) configured to contact the roller 260 in the first state and a second support bar 320 including a protrusion (e.g., a second protrusion 324 in FIG. 15) configured to contact the roller 260 in the second state. The structures of the first support bar 310 and the second support bar 320 according to various embodiments will be described below in more detail.

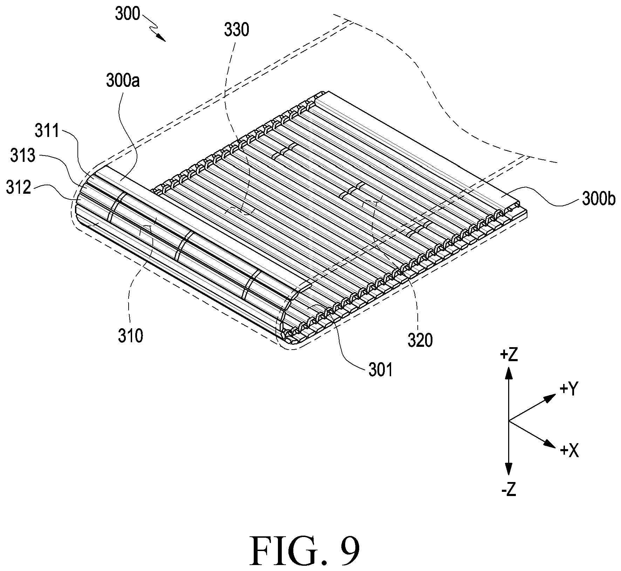

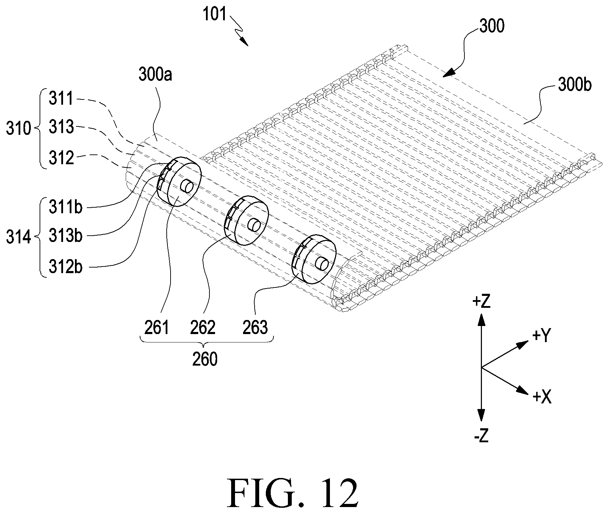

FIG. 9 is a perspective view illustrating a multi-bar structure in a closed state according to various embodiments of the disclosure. FIG. 10 is a perspective view illustrating a first support bar according to various embodiments of the disclosure. FIG. 11 is a cross-sectional view of plane C-C' of FIG. 10. FIG. 12 is a perspective view illustrating the first support bar of FIG. 10 in contact with a roller.

Referring to FIG. 9, FIG. 10, FIG. 11, and/or FIG. 12, the electronic device 101 may include the roller 260 and a multi-bar structure 300. The configurations of the roller 260 and the multi-bar structure 300 in FIG. 9, FIG. 10, FIG. 11, and/or FIG. 12 may be wholly or partially identical to those of the roller 260 and the multi-bar structure 232 in FIGS. 6 to 8.

According to various embodiments, the multi-bar structure 300 may include at least one first support bar 310 configured to contact the roller 260 in the first state (e.g., closed state) of the electronic device 101. According to an embodiment, the first support bar 310 may include a (1-1)^{th} bar 311, a (1-2)^{th} bar 312, and a (1-3)^{th} bar 313 arranged substantially parallel to each other. According to an embodiment, the first support bar 310 may be arranged adjacent to a first end 300a of the multi-bar structure 300 among a plurality of bars 301 of the multi-bar structure 300. The first end 300a of the multi-bar structure 300 may be interpreted as an end of the multi-bar structure 300, which is adjacent to the first display area (e.g., the first display area A1 in FIG. 4).

The first support bar 310 includes at least one first protrusion 314. According to an embodiment, the multi-bar structure 300 may include a front surface 300c supporting at least a portion of the display (e.g., the display 231 in FIG. 4) and a rear surface 300d opposite to the front surface 300c. According to an embodiment, the first protrusion 314 may be interpreted as a portion of the multi-bar structure 300 protruding from the rear surface 300d. The first protrusion 314 is in contact with the roller 260 in the fully closed state of the electronic device 101. When the first protrusion 314 is in contact with the roller 260, the distance between the dustproof member (e.g., the dustproof member 270 in FIG. 7) and the display (e.g., the display 231 in FIG. 7) is reduced. For example, when the first protrusion 314 is in contact with the roller 260, the display 231 may be in contact with the dustproof member 270. As the display 231 contacts the dustproof member 270, the introduction of a foreign material into the electronic device 101 may be prevented in the fully closed state of the electronic device 101. According to an embodiment, the height d of the first protrusion 314 may be about 0.3mm.

According to various embodiments, the first support bar 310 may include a plurality of first protrusions 314. For example, the first protrusions 314 may include first protrusions 314a, 314b, and 314c located along one first support bar 310 (e.g., the (1-1)^{th} bar 311, the (1-2)^{th} bar 312, and/or the (1-3)^{th} bar 313). For example, the (1-1)^{th} bar 311, the (1-2)^{th} bar 312, and/or the (1-3)^{th} bar 313 may include a (1-4)^{th} protrusion 314a, a (1-5)^{th} protrusion 314b, and a (1-6)^{th} protrusion 314c.

Although one first support bar 310 includes three first protrusions 314a, 314b, and 314c in FIGS. 9 to 12, the number of first protrusions 314 is not limited. For example, according to another embodiment, one first support bar 310 may include four or more first protrusions 314 or two or fewer first protrusions 314.

According to various embodiments, the roller 260 may contact the first protrusions 314. When the roller 260 contacts the first protrusion 314, the multi-bar structure 300 may contact the dustproof member (e.g., the dustproof member 270 in FIG. 4). According to an embodiment, the roller 260 may include a plurality of rollers 261, 262, and 263. For example, the roller 260 may include a first roller 261 configured to contact the (1-4)^{th} protrusion 314a, a second roller 262 configured to contact the (1-5)^{th} protrusion 314b, and a third roller 263 configured to contact the (1-6)^{th} protrusion 314c. According to an embodiment, the first roller 261, the second roller 262, and the third roller 263 may be arranged substantially parallel to each other.

According to various embodiments, the first support bar 310 may include at least one (1-3)^{th} bar 313 arranged between the (1-1)^{th} bar 311 and the (1-2)^{th} bar 312. For example, although a single (1-3)^{th} bar 313 is shown in FIGS. 9 to 12, the first support bar 310 may include two or more (1-3)^{th} bars 313 based on the size of the roller 260. According to an embodiment, the shape of the (1-3)^{th} bar 313 may be substantially the same as the shape of the (1-1)^{th} bar 311.

According to various embodiments, the first support bar 310 may have a shape to reduce impact caused by contact between the multi-bar structure 300 and the roller 260. For example, the first protrusion 314 may have a shape that is at least partially curved. According to an embodiment, the at least one first protrusion 314 may have a first radius of curvature R1. According to an embodiment, the (1-1)^{th} bar 311 may include a first curved surface 311a having the first radius of curvature R1. The first curved surface 311a may be a surface of the (1-1)^{th} protrusion 311b formed on the (1-1)^{th} bar 311. According to an embodiment, first curved surfaces 311a may be formed on both ends of the (1-1)^{th} protrusion 311b. According to an embodiment, the (1-3)^{th} bar 313 may include a fifth curved surface 313a having the first radius of curvature R1. The fifth curved surface 313a may be a surface of the (1-3)^{th} protrusion 313b formed on the (1-3)^{th} bar 313. According to an embodiment, fifth curved surfaces 313a may be formed on both ends of the (1-1)^{th} protrusion 313b.

According to various embodiments, the (1-2)^{th} bar 312 may be the first in the first support bar 310 to contact the roller 260 in the slide-in operation of the electronic device 101. According to an embodiment, in the first support bar 310, the (1-1)^{th} bar 311 may be closest to the first end 300a of the multi-bar structure 300, and the (1-2)^{th} bar 312 may be closest to the second end 300b of the multi-bar structure 300. According to an embodiment, the (1-3)^{th} bar 313 may be located between the (1-1)^{th} bar 311 and the (1-2)^{th} bar 312. According to an embodiment, the (1-2)^{th} bar 312 may be located between the (1-1)^{th} bar 311 and the second support bar 320.

According to various embodiments, the (1-2)^{th} bar 312 may have a shape to reduce impact caused by contact between the multi-bar structure 300 and the roller 260. For example, the (1-2)^{th} bar 312 may include a second curved surface 312a having a second radius of curvature R2 greater than the first radius of curvature R1. In the first protrusion, the second curved surface 312a may be a surface that first contacts the roller 260 in the slide-in operation of the electronic device 101. As the second radius of curvature R2 of the second curved surface 312a is greater than the first radius of curvature R1, vibration of the electronic device 101 and/or damage to the electronic device 101 caused by contact between the multi-bar structure 300 and the roller 260 may be reduced. According to an embodiment, the second curved surface 312a may be a surface of the (1-2)^{th} protrusion 312b formed on the (1-2)^{th} bar 312b. According to an embodiment, the (1-2)^{th} protrusion 312b may include curved surfaces having different radiuses of curvature. For example, the (1-2)^{th} protrusion 312b may include the second curved surface 312a and a curved surface 312c which is opposite to the second curved surface 312a and has the first radius of curvature R1. The second curved surface 312a may be directed toward the second end 300b, and the curved surface 312c may be directed toward the first end 300a.

According to various embodiments, the multi-bar structure 300 may include a protruding region 305. According to an embodiment, the protruding region 305 may form an end portion of a bar 301. According to an embodiment, the multi-bar structure 300 may receive pressure from the guide rail (e.g., the guide rail 250 in FIG. 4) using the protruding region 305. For example, the protruding region 305 may be inserted in the slit 251 of the guide rail 250. When the electronic device 101 performs the slide-out operation, the protruding region 305 may be provided with pressure from the inner portion (e.g., the inner portion 252 in FIG. 4) of the guide rail 250. When the electronic device 101 performs the slide-in portion, the protruding region 305 may be provided with pressure from the outer portion (e.g., the outer portion 253 in FIG. 4) of the guide rail 250.

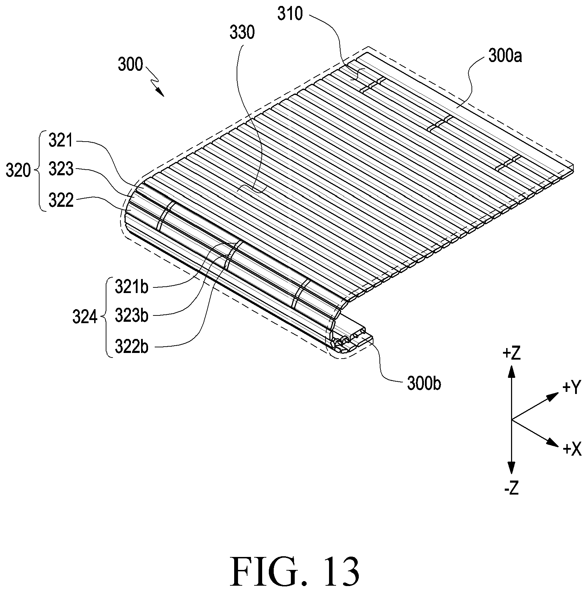

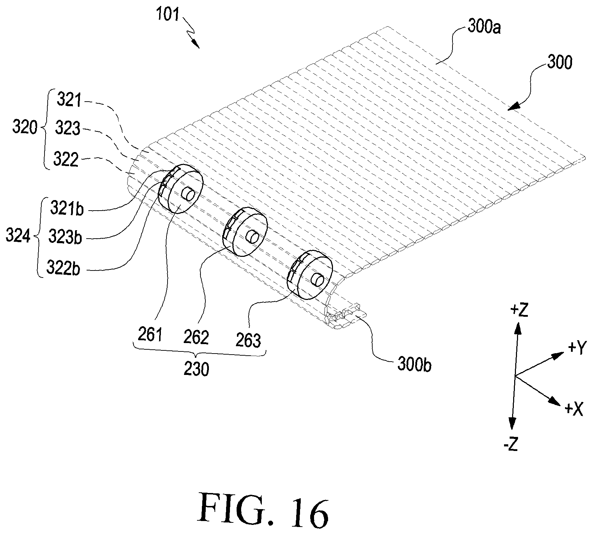

FIG. 13 is a perspective view illustrating a multi-bar structure in an opened state according to various embodiments of the disclosure. FIG. 14 is a diagram illustrating a second support bar according to various embodiments of the disclosure. FIG. 15 is a cross-sectional view illustrating plane D-D' of FIG. 14. FIG. 16 is a perspective view illustrating the second support bar of FIG. 14 in contact with a roller.

Referring to FIG. 13, FIG. 14, FIG. 15, and/or FIG. 16, the electronic device 101 may include the roller 260 and the multi-bar structure 300. The configurations of the roller 260 and the multi-bar structure 300 in FIG. 13, FIG. 14, FIG. 15, and/or FIG. 16 may be wholly or partially identical to those of the roller 260 and the multi-bar structure 300 in FIG. 9, FIG. 10, FIG. 11, and/or FIG. 12.

The multi-bar structure 300 includes at least one second support bar 320 configured to contact the roller 260 in the second state (e.g., opened state) of the electronic device 101. According to an embodiment, the second support bar 320 may include a (2-1)^{th} bar 321, a (2-2)^{th} bar 322, and a (2-3)^{th} bar 323 arranged substantially parallel to each other. According to an embodiment, the second support bar 320 may be arranged closer to the second end 300b of the multi-bar structure 300 than the first support bar 310. For example, the second bar 320 may be closer to the second end 300b than to the first end 300a among the plurality of bars 301 including protrusions (e.g., the first protrusion 314 and the second protrusion 324 in FIG. 10). According to an embodiment, at least one bar without the protrusions 314 and 324 may be arranged between the second support bar 320 and the second end 300b. The second support bar 320 includes at least one second protrusion 324. According to an embodiment, the multi-bar structure 300 may include the front surface 300c supporting at least a portion of the display (e.g., the display 231 in FIG. 4) and the rear surface 300d opposite to the front surface 300c. According to an embodiment, the second protrusion 314 may be interpreted as a portion of the multi-bar structure 300 protruding from the rear surface 300d. According to an embodiment, the second protrusion 324 may be in contact with the roller 260 in the fully opened state of the electronic device 101. When the second protrusion 314 is in contact with the roller 260, the distance between the dustproof member (e.g., the dustproof member 270 in FIG. 8) and the display (e.g., the display 231 in FIG. 8) is reduced. For example, when the second protrusion 324 is in contact with the roller 260, the display 231 may be in contact with the dustproof member 270. As the display 231 contacts the dustproof member 270, the introduction of a foreign material into the electronic device 101 may be prevented in the fully opened state of the electronic device 101.

According to various embodiments, the second support bar 320 may include a plurality of second protrusions 324. For example, the second protrusions 314 may include second protrusions 324a, 324b, and 324c located along one second support bar 320 (e.g., the (2-1)^{th} bar 321, the (2-2)^{th} bar 322, and/or the (2-3)^{th} bar 323). For example, the (2-1)^{th} bar 321, the (2-2)^{th} bar 322, and/or the (2-3)^{th} bar 323 may include a (2-4)^{th} protrusion 324a, a (2-5)^{th} protrusion 324b, and a (2-6)^{th} protrusion 324c. Although one second support bar 320 includes three second protrusions 324 in FIGS. 12 to 15, the number of second protrusions 324 is not limited to three. For example, according to another embodiment, one second support bar 320 may include four or more second protrusions 324 or two or fewer second protrusions 324.

According to various embodiments, the roller 260 may contact the second protrusion 314. When the roller 260 contacts the second protrusion 314, the multi-bar structure 300 may contact the dustproof member (e.g., the dustproof member 270 in FIG. 4). According to an embodiment, the roller 260 may include the plurality of rollers 261, 262, and 263. For example, the roller 260 may include the first roller 261 configured to contact the (2-4)^{th} protrusion 324a, the second roller 262 configured to contact the (2-5)^{th} protrusion 324b, and the third roller 263 configured to contact the (2-6)^{th} protrusion 324c. According to an embodiment, the first roller 261 may contact the (1-4)^{th} protrusion 314a in the closed state of the electronic device 101 and contact the (2-4)^{th} protrusion 324a in the opened state of the electronic device 101. The second roller 262 may contact the (1-5)^{th} protrusion 314b in the closed state of the electronic device 101 and contact the (2-5)^{th} protrusion 324b in the opened state of the electronic device 101. The third roller 263 may contact the (1-6)^{th} protrusion 314c in the closed state of the electronic device 101 and contact the (2-6)^{th} protrusion 324c in the opened state of the electronic device 101.

According to various embodiments, the second support bar 320 may include at least one (2-3)^{th} bar 323 arranged between the (2-1)^{th} bar 321 and the (2-2)^{th} bar 322. For example, although one (2-3)^{th} bar 323 is shown in FIGS. 9 to 12, the second support bar 320 may include two or more (2-3)^{th} bars 323 based on the size of the roller 260. According to an embodiment, the shape of the (2-3)^{th} bar 323 may be substantially the same as the shape of the (2-2)^{th} bar 322.

According to various embodiments, the second support bar 320 may have a shape to reduce impact caused by contact between the multi-bar structure 300 and the roller 260. For example, the second protrusion 324 may have a shape that is at least partially curved. According to an embodiment, the at least one second protrusion 324 may have a fourth radius of curvature R4. According to an embodiment, the (2-2)^{th} bar 322 may include a fifth curved surface 322a having the fourth radius of curvature R4. The fifth curved surface 322a may be a surface of the (2-2)^{th} protrusion 322b formed on the (2-2)^{th} bar 322. According to an embodiment, fifth curved surfaces 322a may be formed on both ends of the (2-2)^{th} protrusion 322b. According to an embodiment, the (2-3)^{th} bar 323 may include a sixth curved surface 323a having the fourth radius of curvature R2. The sixth curved surface 323a may be a surface of the (2-3)^{th} protrusion 323b formed on the (2-3)^{th} bar 323. According to an embodiment, sixth curved surfaces 323a may be formed on both ends of the (2-3)^{th} protrusion 323b.

According to various embodiments, the (2-1)^{th} bar 321 may be the first in the second support bar 320 to contact the roller 260 in the slide-out operation of the electronic device 101. According to an embodiment, in the second support bar 310, the (2-1)^{th} bar 321 may be spaced farthest from the second end 300b of the multi-bar structure 300. For example, the (2-1)^{th} bar 321 may be located between the (2-2)^{th} bar 322 and the first support bar 310. For example, the (2-1)^{th} bar 321 may be located between the (2-2)^{th} bar 322 and a third support bar 330. The (2-3)^{th} bar 323 may be located between the (2-1)^{th} bar 321 and the (2-2)^{th} bar 322.

According to various embodiments, the (2-1)^{th} bar 321 may have a shape to reduce impact caused by contact between the multi-bar structure 300 and the roller 260. For example, the (2-1)^{th} bar 321 may include a fourth curved surface 321a having a third radius of curvature R3 greater than the fourth radius of curvature R4. The fourth curved surface 321a may be a surface of the second protrusion 324, which first contacts the roller 260 in the slide-out operation of the electronic device 101. As the third radius of curvature R3 of the fourth curved surface 321a is greater than the fourth radius of curvature R4, vibration of the electronic device 101 and/or damage to the electronic device 101 caused by contact between the multi-bar structure 300 and the roller 260 may be reduced. According to an embodiment, the fourth curved surface 321a may be a surface of the (2-1)^{th} protrusion 321a formed on the (2-1)^{th} bar 321a. According to an embodiment, the (2-1)^{th} protrusion 321a may include curved surfaces having different radiuses of curvature. For example, the (2-1)^{th} protrusion 321b may include the fourth curved surface 321a having the fourth radius of curvature R4 and another curved surface extending from the fourth curved surface 321a and having the third radius of curvature R3.

According to an embodiment, the third radius of curvature R3 of the (2-1)^{th} protrusion 321b may be substantially equal to the second radius of curvature R2 of the (1-2)^{th} protrusion 312b. The fourth radius of curvature R4 of the (2-1)^{th} protrusion 321b may be substantially equal to the first radius of curvature R1 of the (1-2)^{th} protrusion 312b.

According to various embodiments, the multi-bar structure 300 includes at least one third support bar 330 arranged between the first support bar 310 and the second support bar 320.

The third support bar 330 faces the roller 260, spaced apart from the roller 260 in the intermediate state. According to an embodiment, the third support bar 330 may not include a protrusion (e.g., the first protrusion 314 in FIG. 10 and the second protrusion 324 in FIG. 14). As the third support bar 330 is not included, the multi-bar structure 300 may be spaced apart from the roller 260 in the intermediate state.

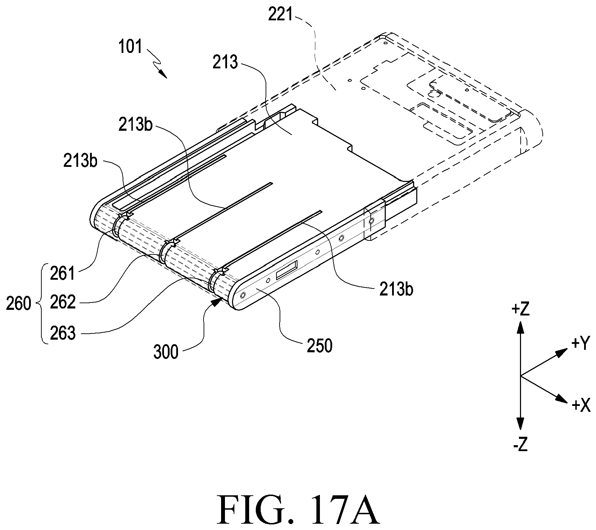

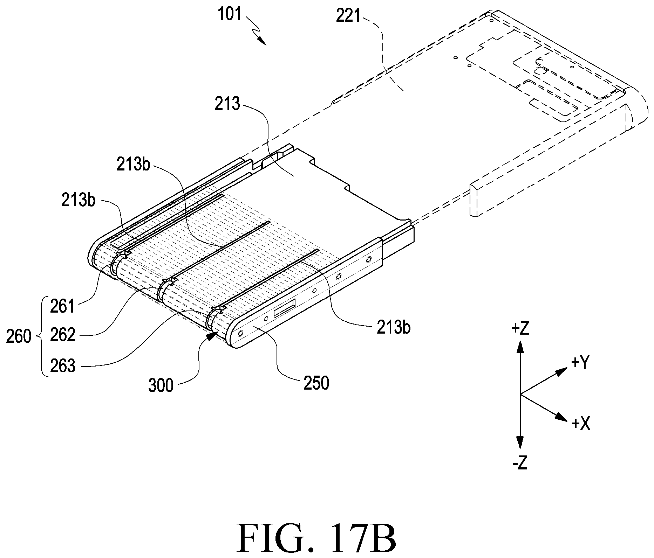

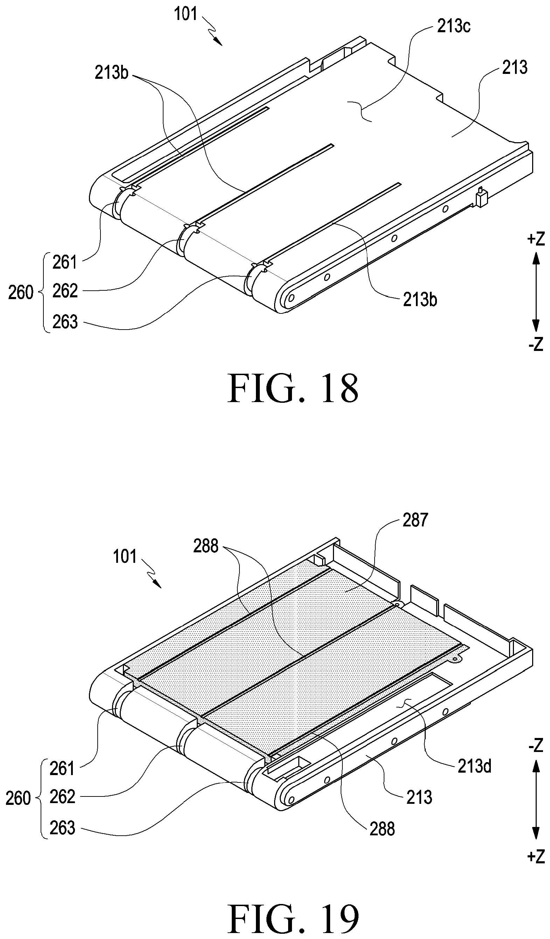

FIG. 17A is an internal perspective view illustrating an electronic device in a closed state according to various embodiments of the disclosure. FIG. 17B is an internal perspective view illustrating an electronic device in an opened state according to various embodiments of the disclosure. FIG. 18 is a perspective view illustrating an electronic device including a frame and a roller mounted on the frame according to various embodiments of the disclosure.

Referring to FIG. 17A, FIG. 17B, and/or FIG. 18, the electronic device 101 may include the frame 213, the second cover member 221, the guide rail 250, the roller 260, and the multi-bar structure 300. The configurations of the frame 213, the second cover member 221, the guide rail 250, the roller 260, and the multi-bar structure 300 in FIG. 17A, FIG. 17B, and/or FIG. 18 may be wholly or partially identical to those of the frame 213, the second cover member 221, the guide rail 250, the roller 260, and the multi-bar structure 232 in FIG. 4.

According to various embodiments, the frame 213 may guide movement of the multi-bar structure 300. For example, the guide rail 250 may be connected to the frame 213 and move together with the frame 213. As the frame 213 moves relative to the second cover member 221, the guide rail 250 may provide pressure to the multi-bar structure 300. When the electronic device 101 performs a sliding operation, the multi-bar structure 300 may move with respect to the frame 213 and the second cover member 221.

According to various embodiments, the frame 213 may accommodate at least a portion of the multi-bar structure 300. For example, the frame 213 may include a first recess 213b to accommodate at least a portion of a protrusion (e.g., the first protrusion 314 in FIG. 10) of the multi-bar structure 300. According to an embodiment, the first protrusion 314 may be accommodated in the first recess 213b in the intermediate state in which the electronic device 101 is partially opened. The first protrusion 314 may move with respect to the frame 213 along the first recess 213b in the intermediate state.

According to various embodiments, the first recess 213b may be formed to correspond to the roller 260. For example, the number of first recesses 213b formed on the frame 213 may be equal to the number of rollers 260. According to an embodiment, three rollers 260 (e.g., the first roller 261, the second roller 262, and the third roller 263) may be included, and three first recesses 213b may be included, which face the first roller 261, the second roller 262, and the third roller 263, respectively. However, the number of rollers 260 and the number of first recesses 213b are not limited. According to an embodiment, the frame 213 may include a first frame surface 213c facing the display (e.g., the display 231 in FIG. 4). The first recess 213b may be a groove formed on the first frame surface 213c of the frame 213.

FIG. 19 is a perspective view illustrating an electronic device including a frame, a roller, and a battery cover according to various embodiments of the disclosure.

Referring to FIG. 19, the electronic device 101 may include the frame 213, the roller 260, and a battery cover 287. The configurations of the frame 213 and the roller 260 in FIG. 19 may be wholly or partially identical to those of the frame 213 and the roller 260 in FIG. 18.

According to various embodiments, the battery cover 287 may protect at least a portion of the battery (e.g., the battery 289 of FIG. 4). For example, the battery cover 287 may cover at least a portion of the battery 289. According to an embodiment, the battery cover 287 may be connected to the frame 213. According to an embodiment, the battery 289 may be disposed in a space between the frame 213 and the battery cover 287.

According to various embodiments, the battery cover 287 may guide movement of the multi-bar structure 300. For example, the battery cover 287 may accommodate at least a portion of the multi-bar structure 300. According to an embodiment, the battery cover 287 may include a second recess 288 to accommodate at least a portion of a protrusion (e.g., the second protrusion 324 in FIG. 14) of the multi-bar structure 300. According to an embodiment, in the intermediate state in which the electronic device 101 is partially opened, the second protrusion 324 may be accommodated in the second recess 288. **In** the intermediate state, the second protrusion 324 may move with respect to the frame 213 and/or the battery cover 287 along the second recess 288.

According to various embodiments, the second recess 288 may be formed to correspond to the roller 260. For example, the number of second recesses 288 formed on the battery cover 287 may be equal to the number of rollers 260. According to an embodiment, three rollers 260 (e.g., the first roller 261, the second roller 262, and the third roller 263) may be included, and three second recesses 288 may be included, which face the first roller 261, second roller 262, and third roller 263, respectively.

According to an embodiment, the frame 213 may include a second frame surface 213d opposite to the first frame face 213c that faces the display (e.g., the display 231 in FIG. 4). The battery cover 287 may be disposed on the second frame surface 213d opposite to the first frame surface 213c of the frame 213.

According to an embodiment, a protrusion (e.g., the first protrusion 314 in FIG. 10 and/or the second protrusion 324 in FIG. 14) of the multi-bar structure 300 may move along the first recess 213b, the roller 260, and/or the second recess 288. For example, the first protrusion 314 may be accommodated in the first recess 213b in the intermediate state and opened state of the electronic device 101, and may contact the roller 260 in the closed state of the electronic device 101. The second protrusion 324 may be accommodated in the second recess 288 in the intermediate state and closed state of the electronic device 101, and may contact the roller 260 in the opened state of the electronic device 101.

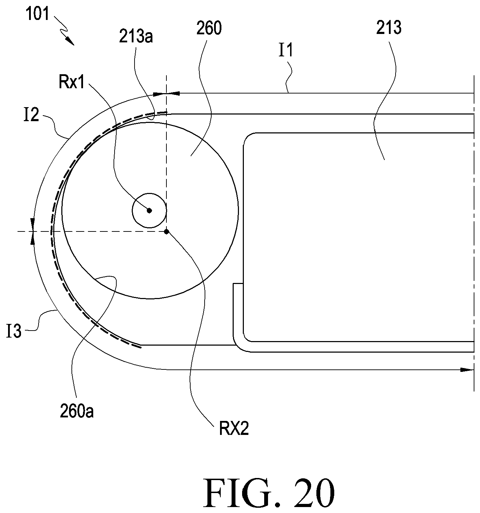

FIG. 20 is a diagram illustrating movement of a multi-bar structure according to various embodiments of the disclosure.

Referring to FIG. 20, the electronic device 101 may include the frame 213 and the roller 260. The configurations of the frame 213 and the roller 260 in FIG. 20 may be wholly or partially identical to those of the frame 213 and the roller 260 in FIGS. 6 to 8.

According to various embodiments, the multi-bar structure (e.g., the multi-bar structure 300 in FIG. 9) may move along the frame 213.

According to an embodiment, the roller 260 may rotate with respect to the frame 213 around a first rotation axis Rx1. According to an embodiment, the multi-bar structure 300 may move along sections I1, I2, and I3 spaced apart from the curved surface 213a of the frame 213 by specified distances. For example, the multi-bar structure 300 may move with respect to a second rotation axis Rx2 spaced apart from the curved surface 213a by a specified distance.

According to an embodiment, a fifth radius of curvature R5 of the curved surface 213a may be greater than a sixth radius of curvature R6 of the roller 260.

According to various embodiments, the multi-bar structure 300 may include a protrusion (e.g., the first protrusion 314 in FIG. 10 and/or the second protrusion 324 in FIG. 14). According to an embodiment, when the protrusions 314 and 324 of the multi-bar structure 300 pass through a first section I1 or a third section I3, the multi-bar structure 300 may be spaced apart from the roller 260. As the multi-bar structure 300 is spaced apart from a surface 260a of the roller 260, the display (e.g., display 231 in FIG. 4) may be spaced apart from the dustproof member (e.g., the dustproof member 270 in FIG. 4). According to an embodiment, as the protrusions 314 and 324 of the multi-bar structure 300 pass through a second section I2, the protrusions 314 and 324 of the multi-bar structure 300 may cause the multi-bar structure 300 to contact the surface 260a of the roller 260. As the multi-bar structure 300 contacts the surface 260a of the roller 260, the arrangement of at least a portion of the multi-bar structure 300 may be deformed, and the display (e.g., the display 231 in FIG. 4) may contact the dustproof member (e.g., the dustproof member 270 in FIG. 4).

According to various embodiments of the disclosure, an electronic device (e.g., the electronic device 101 in FIG. 4) may include a flexible display (e.g., the display 203 in FIG. 3), a housing (the housing 210 in FIG. 3) including a first housing (e.g., the first housing 201 in FIG. 3) surrounding at least a portion of the flexible display and a second housing (e.g., the second housing 202 in FIG. 3) supporting the flexible display and configured to move relative to the first housing, a multi-bar structure (e.g., the multi-bar structure 232 in FIG. 4) supporting at least a portion of the flexible display, a roller (e.g., the roller 260 in FIG. 4) rotatably connected to the first housing, and a dustproof member (e.g., the dustproof member 270 in FIG. 4) connected to the first housing. The multi-bar structure may include at least one first support bar (e.g., the first support bar 310 in FIG. 10) including at least one first protrusion (e.g., the first protrusion 314 in FIG. 10) configured to contact the roller in the first state, and at least one second support bar (e.g., the second support bar 320 in FIG. 13) including at least one second protrusion (e.g., the second protrusion 324 in FIG. 14) configured to contact the roller in the second state.

According to various embodiments, the multi-bar structure may be configured to be spaced apart from the roller, facing the roller in the intermediate state, and include at least one third support bar (e.g., the third support bar 330 in FIG. 13) arranged between the at least one first support bar and the at least one second support bar.

According to various embodiments, the at least one first support bar may include a (1-1)^{th} bar (e.g., the (1-1)^{th} bar 311 in FIG. 11) including a first curved surface (e.g., the first curved surface 311a in FIG. 11) formed on the at least one first protrusion and having a first radius of curvature (e.g., the first radius of curvature R1 in FIG. 11), and a (1-2)^{th} bar (e.g., the (1-2)^{th} bar 312 in FIG. 11) including a second curved surface (e.g., the second curved surface 312a in FIG. 11) formed on the at least one first protrusion and having a second radius of curvature (e.g., the second radius of curvature R2 in FIG. 11) greater than the first radius of curvature, and the (1-2)^{th} bar may be located between the at least one second support bar and the (1-1)^{th} bar.

According to various embodiments, the at least one second support bar may include a (2-1)^{th} bar (e.g., the (2-1)^{th} bar 321 in FIG. 15) including a third curved surface (e.g., the third curved surface 321a in FIG. 15) between the first state and the second state and having a third radius of curvature (e.g., the third radius of curvature R3 in FIG. 15), and a (2-2)^{th} bar (e.g., the (2-2)^{th} bar 322 in FIG. 15) including a fourth curved surface (e.g., the fourth curved surface 322a in FIG. 15) formed on the at least one second protrusion and having a fourth radius of curvature (e.g., the fourth radius of curvature R4 in FIG. 15) smaller than the third radius of curvature, and the (2-1)^{th} bar may be located between the at least one first support bar and the (2-2)^{th} bar.

According to various embodiments, the first housing may include a frame (e.g., the frame 213 in FIG. 4) accommodating the roller, and a first cover member (e.g., the first cover member 211 in FIG. 4) surrounding at least a portion of the frame.

According to various embodiments, the frame may include at least one first recess (e.g., the first recess 213b in FIG. 17A) to accommodate the at least one first protrusion therein in the intermediate state.

According to various embodiments, the electronic device may further include a battery (e.g., the battery 289 in FIG. 4) accommodated in the housing, and a battery cover (e.g., the battery cover 287 in FIG. 19) covering at least a portion of the battery and connected to the frame, and the battery cover may include at least one second recess (e.g., the second recess 288 in FIG. 19) to accommodate the at least one second protrusion therein in the intermediate state.

According to various embodiments, the dustproof member may be connected to the first cover member.

According to various embodiments, the electronic device may further include a guide rail (e.g., the guide rail 250 in FIG. 4) connected to the frame and including a slit (e.g., the slit 251 in FIG. 4) configured to guide a movement of the multi-bar structure.

According to various embodiments, the roller may include a first roller (e.g., the first roller 261 in FIG 12), a second roller (e.g., the second roller 262 in FIG 12), and a third roller (e.g., the third roller 263 in FIG 12) arranged parallel to each other, the first protrusion may include a (1-4)^{th} protrusion (e.g., the (1-4)^{th} protrusion 314a in FIG. 10) configured to contact the first roller in the first state in which the electronic device is closed, a (1-5)^{th} protrusion (e.g., the (1-5)^{th} protrusion 314b in FIG. 10) configured to contact the second roller in the first state, and a (1-6)^{th} protrusion (e.g., the (1-6)^{th} protrusion 314c in FIG. 10) configured to contact the third roller in the first state, and the second protrusion may include a (2-4)^{th} protrusion (e.g., the (2-4)^{th} protrusion 324a in FIG. 14) configured to contact the first roller in the second state in which the electronic device is open, a (2-5)^{th} protrusion (e.g., the (2-4)^{th} protrusion 324b in FIG. 14) configured to contact the second roller in the second state, and a (2-6)^{th} protrusion (e.g., the (2-6)^{th} protrusion 324c in FIG. 10) configured to contact the third roller in the second state.

According to various embodiments, the flexible display may include a first display area (e.g., the first display area A1 in FIG. 4) disposed on the second housing and a second display area (e.g., the second display area A2 in FIG. 4) extending from the first display area and connected to the multi-bar structure.

According to various embodiments, the second housing may include a second cover member (e.g., the second cover member 221 in FIG. 4) supporting the first display area, and a rear cover (e.g., the rear cover 223 in FIG. 4) connected to the second cover member and including an antenna pattern.

According to various embodiments, the electronic device may further include a driving structure (e.g., the driving structure 240 in FIG. 4) connected to the second housing and including a motor structure (e.g., the motor structure 241 in FIG. 4) configured to generate a driving force for sliding movement of the housing.

According to various embodiments, the driving structure may include a gear connected to the motor structure and configured to rotate based on the driving force, and a rack (e.g., the rack 242 in FIG. 4) configured to mesh with the gear and connected to the first housing.

According to various embodiments, the dustproof member may be configured to contact the flexible display in the first state (e.g., the closed state in FIG. 7) or the second state (e.g., the opened state in FIG. 8) and to be spaced apart from the flexible display in the intermediate state (e.g., FIG. 6) between the first state and the second state.

According to various embodiments, the dustproof member may include a plurality of fine fibers.

According to various embodiments of the disclosure, an electronic device (e.g., the electronic device 101 in FIG. 3) may include a first housing (the first housing 201 in FIG. 3), a second housing (e.g., the second housing 202 in FIG. 3) accommodated at least partially in the first housing and configured to move relative to the first housing, a display assembly (e.g., the display assembly 230 in FIG. 4) including a display (e.g., the display 231 in FIG. 4) configured to be unfolded based on sliding movement of the second housing, and a multi-bar structure (e.g., the multi-bar structure 232 in FIG. 4) supporting at least a portion of the flexible display, a roller (e.g., the roller 260 in FIG. 6) rotatably connected to the first housing, and a dustproof member (e.g., the dustproof member 270 in FIG. 6) connected to the first housing and disposed between the first housing and the display. The display assembly may include at least one first support bar (e.g., the first support bar 310 in FIG. 9) including at least one first protrusion (e.g., the first protrusion 314 in FIG. 10) configured to contact the roller in a closed state of the electronic device, at least one second support bar (e.g., the second support bar 320 in FIG. 13) including at least one second protrusion (e.g., the second protrusion 324 in FIG. 14) configured to contact the roller in an opened state of the electronic device, and at least one third support bar (e.g., the third support bar 330 in FIG. 13) disposed between the at least one first support bar and the at least one second support bar and configured to be spaced apart from the roller in an intermediate state between the closed state and the opened state.

According to various embodiments, the at least one first support bar may include a (1-1)^{th} bar (e.g., the (1-1)^{th} bar 311 in FIG. 11) including a first curved surface (e.g., the first curved surface 311a in FIG. 11) formed on the at least one first protrusion and having a first radius of curvature (e.g., the first radius of curvature R1 in FIG. 11), and a (1-2)^{th} bar (e.g., the (1-2)^{th} bar 312 in FIG. 11) including a second curved surface (e.g., the second curved surface 312a in FIG. 11) formed on the at least one first protrusion and having a second radius of curvature (e.g., the second radius of curvature R2 in FIG. 11) greater than the first radius of curvature, and the (1-2)^{th} bar may be located between the at least one third support bar and the (1-1)^{th} bar.

According to various embodiments, the at least one second support bar may include a (2-1)^{th} bar (e.g., the (2-1)^{th} bar 321 in FIG. 15) including a third curved surface (e.g., the third curved surface 321a in FIG. 15) formed on the at least one second protrusion and having a third radius of curvature (e.g., the third radius of curvature R3 in FIG. 15), and a (2-2)^{th} bar (e.g., the (2-2)^{th} bar 322 in FIG. 15) including a fourth curved surface (e.g., the fourth curved surface 322a in FIG. 15) formed on the at least one second protrusion and having a fourth radius of curvature (e.g., the fourth radius of curvature R4 in FIG. 15) smaller than the third radius of curvature, and the (2-1)^{th} bar may be located between the at least one third support bar and the (2-2)^{th} bar.

According to various embodiments, the first housing may include a frame (e.g., the frame 213 in FIG. 4) accommodating the roller, and a first cover member (e.g., the first cover member 211 in FIG. 4) surrounding at least a portion of the frame, and the frame may include at least one first recess (e.g., the first recess 213b in FIG. 17A) to accommodate the at least one first protrusion therein in the intermediate state.

According to various embodiments, the electronic device may further include a battery (e.g., the battery 289 in FIG. 4) accommodated in the housing, and a battery cover (e.g., the battery cover 287 in FIG. 19) covering at least a portion of the battery and connected to the frame, and the battery cover may include at least one second recess (e.g., the second recess 288 in FIG. 19) to accommodate the at least one second protrusion therein in the intermediate state.

The above-described electronic device including a multi-bar structure according to the disclosure is not limited to the embodiments and drawings described above, and it will be apparent to those skilled in the art that various replacements, changes, and modifications may be made within the scope of the appended claims.

## Claims

1. An electronic device (101) comprising:
a flexible display (203, 231);
a first housing (201);
a second housing (202) supporting the flexible display (203, 231) and configured to move relative to the first housing (201);
a multi-bar structure (232, 300) supporting at least a portion of the flexible display (203, 231) and connected to a rear surface (300d) of the flexible display (203, 231);
at least one roller (260) rotatably disposed in the first housing (201); and
a dustproof member (270) disposed in the first housing (201), and disposed between a first cover member (211) of the first housing and the flexible display (203, 231);
wherein the multi-bar structure (232, 300) includes:
at least one first support bar (310) including at least one first protrusion (314) configured to contact the at least one roller (260) in a first state of the electronic device (101) so that a distance between the dustproof member (270) and the flexible display (203, 231) is reduced, and
at least one second support bar (320) including at least one second protrusion (324) configured to contact the at least one roller (260) in a second state of the electronic device (101) so that a distance between the dustproof member (270) and the flexible display (203, 231) is reduced,
wherein at least one third support bar (330) is configured to be spaced apart from the at least one roller (260) while facing the at least one roller (260) in an intermediate state of the electronic device (101) between the first state and the second state and is arranged between the at least one first support bar (310) and the at least one second support bar (320).

2. The electronic device (101) of claim 1, wherein the at least one first support bar (310) includes:
a (1-1)^{th} bar (311) including a first curved surface (311a) formed on the at least one first protrusion (314) and having a first radius of curvature, and
a (1-2)^{th} bar (312) including a second curved surface (312a) formed on the at least one first protrusion (314) and having a second radius of curvature greater than the first radius of curvature, and
wherein the (1-2)^{th} bar (312) is located between the at least one second support bar (320) and the (1-1)^{th} bar (311).

3. The electronic device (101) of claim 1 or 2, wherein the at least one second support bar (320) includes:
a (2-1)^{th} bar (321) including a third curved surface (321a) formed on the at least one second protrusion (324) and having a third radius of curvature, and
a (2-2)^{th} bar (322) including a fourth curved surface (322a) formed on the at least one second protrusion (324) and having a fourth radius of curvature smaller than the third radius of curvature, and
wherein the (2-1)^{th} bar (321) is located between the at least one first support bar (310) and the (2-2)^{th} bar (322).

4. The electronic device (101) of any of claims 1 to 3, wherein the first housing (201) includes a frame (213) accommodating the at least one roller (260), and
wherein the first cover member (211) surrounds at least a portion of the frame (213).

5. The electronic device (101) of claim 4, wherein the frame (213) includes at least one first recess (213b) to accommodate the at least one first protrusion (314) therein in an intermediate state of the electronic device (101) between the first state and the second state.

6. The electronic device (101) of claim 4 or 5, further comprising:
a battery (289) accommodated in the first housing (201); and
a battery cover (287) covering at least a portion of the battery (289) and connected to the frame (213),
wherein the battery cover (287) includes at least one second recess (288) to accommodate the at least one second protrusion (324) therein in an intermediate state of the electronic device (101) between the first state and the second state.

7. The electronic device (101) of any of claims 4 to 6, wherein the dustproof member (270) is connected to the first cover member (211).

8. The electronic device (101) of any of claims 4 to 6, further comprising a guide rail (250) connected to the frame (213) and including a slit (251) configured to guide a movement of the multi-bar structure (232, 300).

9. The electronic device (101) of any of claims 1 to 8, wherein the at least one roller (260) includes a first roller (261), a second roller (262), and a third roller (263) arranged parallel to each other,
wherein the at least one first protrusion (314) includes a (1-4)^{th} protrusion (314a) configured to contact the first roller (261) in the first state in which the electronic device (101) is closed, a (1-5)^{th} protrusion (314b) configured to contact the second roller (262) in the first state, and a (1-6)^{th} protrusion (314c) configured to contact the third roller (263) in the first state, and
wherein the at least one second protrusion (324) includes a (2-4)^{th} protrusion (324a) configured to contact the first roller (261) in the second state in which the electronic device (101) is open, a (2-5)^{th} protrusion (324b) configured to contact the second roller (262) in the second state, and a (2-6)^{th} protrusion (324c) configured to contact the third roller (263) in the second state.

10. The electronic device (101) of any of claims 1 to 9, wherein the flexible display (203, 231) includes a first display area disposed on the second housing (202) and a second display area extending from the first display area and connected to the multi-bar structure (232, 300).

11. The electronic device (101) of claim 10, wherein the second housing (202) includes:
a second cover member (221) supporting the first display area, and
a rear cover (223) connected to the second cover member (221) and including an antenna pattern.

12. The electronic device (101) of any of claims 1 to 11, further comprising a driving structure (240) connected to the second housing (202) and including a motor structure configured to generate a driving force for sliding movement of the second housing (202),
wherein the driving structure (240) includes:
a gear connected to the motor structure and configured to rotate based on the driving force, and
a rack (242) configured to mesh with the gear and connected to the first housing (201).

13. The electronic device (101) of any of claims 1 to 12, wherein the dustproof member (270) is configured to contact the flexible display (203, 231) in the first state or the second state and to be spaced apart from the flexible display (203, 231) in an intermediate state of the electronic device (101) between the first state and the second state.

## Patentansprüche

1. Elektronische Vorrichtung (101), umfassend:
eine flexible Anzeige (203, 231);
ein erstes Gehäuse (201);
ein zweites Gehäuse (202), das die flexible Anzeige (203, 231) stützt und so konfiguriert ist, dass es sich relativ zum ersten Gehäuse (201) bewegt;
eine Mehrstangenstruktur (232, 300), die zumindest einen Abschnitt der flexiblen Anzeige (203, 231) stützt und mit einer Rückfläche (300d) der flexiblen Anzeige (203, 231) verbunden ist;
mindestens eine Rolle (260), die drehbar in dem ersten Gehäuse (201) angeordnet ist; und
ein staubdichtes Element (270), das im ersten Gehäuse (201) angeordnet ist und zwischen einem ersten Abdeckungselement (211) des ersten Gehäuses und der flexiblen Anzeige (203, 231) angeordnet ist;
wobei die Mehrstangenstruktur (232, 300) Folgendes beinhaltet:
mindestens eine erste Stützstange (310), die mindestens einen ersten Vorsprung beinhaltet (314), der so konfiguriert ist, dass er in einem ersten Zustand der elektronischen Vorrichtung (101) die mindestens eine Rolle (260) berührt, sodass ein Abstand zwischen dem staubdichten Element (270) und der flexiblen Anzeige (203, 231) verringert ist, und
mindestens eine zweite Stützstange (320), die mindestens einen zweiten Vorsprung beinhaltet (324), der so konfiguriert ist, dass er in einem zweiten Zustand der elektronischen Vorrichtung (101) die mindestens eine Rolle (260) berührt, sodass ein Abstand zwischen dem staubdichten Element (270) und der flexiblen Anzeige (203, 231) verringert ist,
wobei mindestens eine dritte Stützstange (330) so konfiguriert ist, dass sie in einem Zwischenzustand der elektronischen Vorrichtung (101) zwischen dem ersten Zustand und dem zweiten Zustand von der mindestens einen Rolle (260) beabstandet ist, dieser jedoch zugewandt ist (260), und zwischen der mindestens einen ersten Stützstange (310) und der mindestens einen zweiten Stützstange (320) angeordnet ist.

2. Elektronische Vorrichtung (101) nach Anspruch 1, wobei die mindestens eine erste Stützstange (310) Folgendes beinhaltet:
eine (1-1)-te Stange (311), die eine erste gekrümmte Fläche (311a) beinhaltet, die an dem mindestens einen ersten Vorsprung (314) ausgebildet ist und einen ersten Krümmungsradius aufweist, und
eine (1-2)-te Stange (312), die eine zweite gekrümmte Fläche (312a) beinhaltet, die an dem mindestens einen ersten Vorsprung (314) ausgebildet ist und einen zweiten Krümmungsradius aufweist, der größer ist als der erste Krümmungsradius, und
wobei sich die (1-2)-te Stange (312) zwischen der mindestens einen zweiten Stützstange (320) und der (1-1)-ten Stange (311) befindet.

3. Elektronische Vorrichtung (101) nach Anspruch 1 oder 2, wobei die mindestens eine zweite Stützstange (320) Folgendes beinhaltet:
eine (2-1)-te Stange (321), die eine dritte gekrümmte Fläche (321a) beinhaltet, die an dem mindestens einen zweiten Vorsprung (324) ausgebildet ist und einen dritten Krümmungsradius aufweist, und
eine (2-2)-te Stange (322), die eine vierte gekrümmte Fläche (322a) beinhaltet, die an dem mindestens einen zweiten Vorsprung (324) ausgebildet ist und einen vierten Krümmungsradius aufweist, der kleiner ist als der dritte Krümmungsradius, und
wobei sich die (2-1)-te Stange (321) zwischen der mindestens einen ersten Stützstange (310) und der (2-2)-ten Stange (322) befindet.

4. Elektronische Vorrichtung (101) nach einem der Ansprüche 1 bis 3, wobei das erste Gehäuse (201) einen Rahmen (213) beinhaltet, der die mindestens eine Rolle (260) aufnimmt, und
wobei das erste Abdeckungselement (211) mindestens einen Abschnitt des Rahmens (213) umgibt.

5. Elektronische Vorrichtung (101) nach Anspruch 4, wobei der Rahmen (213) mindestens eine erste Aussparung (213b) zum Aufnehmen des mindestens einen ersten Vorsprungs (314) darin in einem Zwischenzustand der elektronischen Vorrichtung (101) zwischen dem ersten Zustand und dem zweiten Zustand beinhaltet.

6. Elektronische Vorrichtung (101) nach Anspruch 4 oder 5, ferner umfassend:
eine Batterie (289), die im ersten Gehäuse (201) aufgenommen ist; und
eine Batterieabdeckung (287), die mindestens einen Abschnitt der Batterie (289) abdeckt und mit dem Rahmen (213) verbunden ist,
wobei die Batterieabdeckung (287) mindestens eine zweite Aussparung (288) zum Aufnehmen des mindestens einen zweiten Vorsprungs (324) darin in einem Zwischenzustand der elektronischen Vorrichtung (101) zwischen dem ersten Zustand und dem zweiten Zustand beinhaltet.

7. Elektronische Vorrichtung (101) nach einem der Ansprüche 4 bis 6, wobei das staubdichte Element (270) mit dem ersten Abdeckungselement (211) verbunden ist.

8. Elektronische Vorrichtung (101) nach einem der Ansprüche 4 bis 6, ferner umfassend eine Führungsschiene (250), die mit dem Rahmen (213) verbunden ist und einen Schlitz (251) beinhaltet, der so konfiguriert ist, dass er eine Bewegung der Mehrstangenstruktur (232, 300) führt.

9. Elektronische Vorrichtung (101) nach einem der Ansprüche 1 bis 8, wobei die mindestens eine Rolle (260) eine erste Rolle (261), eine zweite Rolle (262) und eine dritte Rolle (263) beinhaltet, die parallel zueinander sind,
wobei der mindestens eine erste Vorsprung (314) einen (1-4)-ten Vorsprung (314a), der so konfiguriert ist, dass er im ersten Zustand, in dem die elektronische Vorrichtung (101) geschlossen ist, die erste Rolle (261) berührt, einen (1-5)-ten Vorsprung (314b), der so konfiguriert ist, dass er im ersten Zustand die zweite Rolle (262) berührt, und einen (1-6)-ten Vorsprung (314c) beinhaltet, der so konfiguriert ist, dass er im ersten Zustand die dritte Rolle (263) berührt, und
wobei der mindestens eine zweite Vorsprung (324) einen (2-4)-ten Vorsprung (324a), der so konfiguriert ist, dass er im zweiten Zustand, in dem die elektronische Vorrichtung (101) offen ist, die erste Rolle (261) berührt, einen (2-5)-ten Vorsprung (324b), der so konfiguriert ist, dass er im zweiten Zustand die zweite Rolle (262) berührt, und einen (2-6)-ten Vorsprung (324c) beinhaltet, der so konfiguriert ist, dass er im zweiten Zustand die dritte Rolle (263) berührt.

10. Elektronische Vorrichtung (101) nach einem der Ansprüche 1 bis 9, wobei die flexible Anzeige (203, 231) einen ersten Anzeigebereich, der auf dem zweiten Gehäuse liegt (202) angeordnet ist, und einen zweiten Anzeigebereich beinhaltet, der sich vom ersten Anzeigebereich erstreckt und mit der Mehrstangenstruktur (232, 300) verbunden ist.

11. Elektronische Vorrichtung (101) nach Anspruch 10, wobei das zweite Gehäuse (202) Folgendes beinhaltet:
ein zweites Abdeckungselement (221), das den ersten Anzeigebereich stützt, und
eine Rückabdeckung (223), die mit dem zweiten Abdeckungselement (221) verbunden ist und ein Antennenmuster beinhaltet.

12. Elektronische Vorrichtung (101) nach einem der Ansprüche 1 bis 11, ferner umfassend eine Antriebsstruktur (240), die mit dem zweiten Gehäuse (202) verbunden ist und eine Motorstruktur beinhaltet, die so konfiguriert ist, dass sie eine Antriebskraft für eine Gleitbewegung des zweiten Gehäuses (202) erzeugt,
wobei die Antriebsstruktur (240) Folgendes beinhaltet:
ein Zahnrad, das mit der Motorstruktur verbunden ist und so konfiguriert ist, dass es sich basierend auf der Antriebskraft dreht, und
eine Zahnstange (242), die so konfiguriert ist, dass sie mit dem Zahnrad in Eingriff steht, und die mit dem ersten Gehäuse (201) verbunden ist.

13. Elektronische Vorrichtung (101) nach einem der Ansprüche 1 bis 12, wobei das staubdichte Element (270) so konfiguriert ist, dass es im ersten Zustand oder im zweiten Zustand die flexible Anzeige (203, 231) berührt und in einem Zwischenzustand der elektronischen Vorrichtung (101) zwischen dem ersten Zustand und dem zweiten Zustand von der flexiblen Anzeige (203, 231) beabstandet ist.

## Revendications

1. Dispositif électronique (101) comprenant :
un affichage flexible (203, 231) ;
un premier boîtier (201) ;
un deuxième boîtier (202) supportant l'affichage flexible (203, 231) et configuré pour se déplacer par rapport au premier boîtier (201) ;
une structure à barres multiples (232, 300) supportant au moins une partie de l'affichage flexible (203, 231) et reliée à une surface arrière (300d) de l'affichage flexible (203, 231) ;
au moins un rouleau (260) monté de manière rotative dans le premier boîtier (201) ; et
un élément anti-poussière (270) disposé dans le premier boîtier (201), et disposé entre un premier élément de couvercle (211) du premier boîtier et l'affichage flexible (203, 231) ;
dans lequel la structure à barres multiples (232, 300) comprend :
au moins une première barre de support (310) comportant au moins une première saillie (314) configurée pour entrer en contact avec l'au moins un rouleau (260) dans un premier état du dispositif électronique (101), de sorte qu'une distance entre l'élément anti-poussière (270) et l'affichage flexible (203, 231) soit réduite, et
au moins une deuxième barre de support (320) comportant au moins une deuxième saillie (324) configurée pour entrer en contact avec l'au moins un rouleau (260) dans un deuxième état du dispositif électronique (101), de sorte que la distance entre l'élément anti-poussière (270) et l'affichage flexible (203, 231) soit réduite,
dans lequel au moins une troisième barre de support (330) est configurée pour être espacée de l'au moins un rouleau (260) tout en faisant face à l'au moins un rouleau (260) dans un état intermédiaire du dispositif électronique (101) entre le premier état et le deuxième état, et est disposée entre l'au moins une première barre de support (310) et l'au moins une deuxième barre de support (320).

2. Dispositif électronique (101) selon la revendication 1, dans lequel l'au moins une première barre de support (310) comprend :
une (1-1)^{ème} barre (311) comprenant une première surface courbe (311a) formée sur l'au moins une première saillie (314) et présentant un premier rayon de courbure, et
une (1-2)^{ème} barre (312) comprenant une deuxième surface courbe (312a) formée sur l'au moins une première saillie (314) et présentant un deuxième rayon de courbure supérieur au premier rayon de courbure, et
dans lequel la (1-2)^{ème} barre (312) est située entre l'au moins une deuxième barre de support (320) et la (1-1)^{ème} barre (311).

3. Dispositif électronique (101) selon la revendication 1 ou 2, dans lequel l'au moins une deuxième barre de support (320) comprend :
une (2-1)^{ème} barre (321) comprenant une troisième surface courbe (321a) formée sur l'au moins une deuxième saillie (324) et présentant un troisième rayon de courbure, et
une (2-2)^{ème} barre (322) comprenant une quatrième surface courbe (322a) formée sur l'au moins une deuxième saillie (324) et présentant un quatrième rayon de courbure inférieur au troisième rayon de courbure, et
dans lequel la (2-1^{ème} barre (321) est située entre l'au moins une première barre de support (310) et la (2-2)^{ème} barre (322).

4. Dispositif électronique (101) selon l'une quelconque des revendications 1 à 3, dans lequel le premier boîtier (201) comprend un cadre (213) logeant l'au moins un rouleau (260), et
dans lequel le premier élément de couvercle (211) entoure au moins une partie du cadre (213).

5. Dispositif électronique (101) selon la revendication 4, dans lequel le cadre (213) comprend au moins un premier évidement (213b) destiné à recevoir l'au moins une première saillie (314) dans celui-ci dans un état intermédiaire du dispositif électronique (101) entre le premier état et le deuxième état.

6. Dispositif électronique (101) de la revendication 4 ou 5, comprenant en outre :
une batterie (289) logée dans le premier boîtier (201) ; et
un couvercle de batterie (287) recouvrant au moins une partie de la batterie (289) et relié au cadre (213),
dans lequel le couvercle de batterie (287) comprend au moins un deuxième évidement (288) destiné à recevoir l'au moins une deuxième saillie (324) dans celui-ci dans un état intermédiaire du dispositif électronique (101) entre le premier état et le deuxième état.

7. Dispositif électronique (101) selon l'une quelconque des revendications 4 à 6, dans lequel l'élément anti-poussière (270) est relié au premier élément de couvercle (211).

8. Dispositif électronique (101) selon l'une quelconque des revendications 4 à 6, comprenant en outre un rail de guidage (250) relié au cadre (213) et comportant une fente (251) configurée pour guider le mouvement de la structure à barres multiples (232, 300).

9. Dispositif électronique (101) selon l'une quelconque des revendications 1 à 8, dans lequel l'au moins un rouleau (260) comprend un premier rouleau (261), un deuxième rouleau (262) et un troisième rouleau (263) disposés parallèlement les uns aux autres,
dans lequel l'au moins une première saillie (314) comprend une (1-4)^{ème} saillie (314a) configurée pour entrer en contact avec le premier rouleau (261) dans le premier état dans lequel le dispositif électronique (101) est fermé, une (1 à 5)^{ème} saillie (314b) configurée pour entrer en contact avec le deuxième rouleau (262) dans le premier état, et une (1 à 6)^{ème} saillie (314c) configurée pour entrer en contact avec le troisième rouleau (263) dans le premier état, et
dans lequel l'au moins une deuxième saillie (324) comprend une (2-4)^{ème} saillie (324a) configurée pour entrer en contact avec le premier rouleau (261) dans le deuxième état, dans lequel le dispositif électronique (101) est ouvert, une (2-5)^{ème} saillie (324b) configurée pour entrer en contact avec le deuxième rouleau (262) dans le deuxième état, et une (2-6)^{ème} saillie (324c) configurée pour entrer en contact avec le troisième rouleau (263) dans le deuxième état.

10. Dispositif électronique (101) selon l'une quelconque des revendications 1 à 9, dans lequel l'affichage flexible (203, 231) comprend une première zone d'affichage disposée sur le deuxième boîtier (202) et une deuxième zone d'affichage s'étendant à partir de la première zone d'affichage et reliée à la structure à barres multiples (232, 300).

11. Dispositif électronique (101) selon la revendication 10, dans lequel le deuxième boîtier (202) comprend :
un deuxième élément de couvercle (221) supportant la première zone d'affichage, et
un couvercle arrière (223) relié au deuxième élément de couvercle (221) et comportant un motif d'antenne.

12. Dispositif électronique (101) selon l'une quelconque des revendications 1 à 11, comprenant en outre une structure d'entraînement (240) reliée au deuxième boîtier (202) et comportant une structure de moteur configurée pour générer une force d'entraînement destinée à assurer le déplacement coulissant du deuxième boîtier (202),
dans lequel la structure d'entraînement (240) comprend :
un engrenage relié à la structure de moteur et configuré pour tourner en se basant sur la force d'entraînement, et
une crémaillère (242) conçue pour s'engrener avec l'engrenage et reliée au premier boîtier (201).

13. Dispositif électronique (101) selon l'une quelconque des revendications 1 à 12, dans lequel l'élément anti-poussière (270) est configuré pour être en contact avec l'affichage flexible (203, 231) dans le premier état ou dans le deuxième état, et pour être espacé de l'affichage flexible (203, 231) dans un état intermédiaire du dispositif électronique (101) entre le premier état et le deuxième état.
